Europäisches Patentamt

European Patent Office

Office européen des brevets

(19)

(11) **EP 0 783 419 B1**

(12) **EUROPÄISCHE PATENTSCHRIFT**

(45) Veröffentlichungstag und Bekanntmachung des Hinweises auf die Patenterteilung:
**16.12.1998 Patentblatt 1998/51**

(51) Int. Cl.$^6$: **B60T 8/00**

(21) Anmeldenummer: 95934120.7

(22) Anmeldetag: **29.09.1995**

(86) Internationale Anmeldenummer:
**PCT/EP95/03864**

(87) Internationale Veröffentlichungsnummer:
**WO 96/10505 (11.04.1996 Gazette 1996/16)**

(54) **VERFAHREN UND VORRICHTUNG ZUR BESTIMMUNG DER AN EINEM REIFEN ANGREIFENDEN LÄNGSKRAFT UND FAHRZEUGREIFEN DAFÜR**

METHOD AND DEVICE FOR DETERMINING LONGITUDINAL TYRE FORCE AND VEHICLE TYRE THEREFOR

PROCEDE ET DISPOSITIF POUR DETERMINER LA FORCE LONGITUDINALE D'UN PNEUMATIQUE ET PNEUMATIQUE CORRESPONDANT

(84) Benannte Vertragsstaaten:
**DE ES FR GB IT SE**

(30) Priorität: **30.09.1994 DE 4435160**

(43) Veröffentlichungstag der Anmeldung:
**16.07.1997 Patentblatt 1997/29**

(73) Patentinhaber:
**Continental Aktiengesellschaft
30165 Hannover (DE)**

(72) Erfinder:
• **DRÄHNE, Eberhard
D-30823 Garbsen (DE)**

• **BECHERER, Thomas
D-64572 Büttelborn (DE)**

(74) Vertreter: **Schneider, Egon
Continental AG
Postfach 169
30001 Hannover (DE)**

(56) Entgegenhaltungen:
**EP-A- 0 363 570        EP-A- 0 393 375
WO-A-90/05646        WO-A-91/14586
WO-A-93/25400        DE-A- 3 937 966**

**Beschreibung**

Die Erfindung betrifft gemäß dem Oberbegriff des Anspruches 1 ein Verfahren zur Bestimmung der an einem Reifen angreifenden Längskraft. Zu der in Anspruch 1 genannten Erfindung gehören Weiterbildungen gemäß den darauf rückbezogenen Ansprüchen 2 bis 26. Die Erfindung betrifft ferner gemäß dem Oberbegriff des Anspruches 27 eine Vorrichtung zur Bestimmung der an einem Reifen angreifenden Längskraft und/oder zur Bestimmung zumindest einer der an einem Reifen während seiner Rotation sich einstellenden Größen Reifeneinfederung, Latschlänge oder Last-Druck-Verhältnis mit den Weiterbildungen gemäß den darauf zurückbezogenen Ansprüchen 28 bis 43 und einen Fahrzeugreifen gemäß Anspruch 44, der zur Zusammenwirkung mit vorgenannter Vorrichtung und/oder für ein Verfahren gemäß den Ansprüchen 1 bis 26 geeignet ist, mit den Weiterbildungen gemäß den darauf zurückbezogenen Ansprüchen 45 bis 50.

Unter einem Fahrzeugrad wird im Rahmen dieser Anmeldung die Kombination all der Bauteile verstanden, die - abgesehen von den kleinen belastungsabhängigen Deformationen - drehsteif miteinander verbunden und zur Rotation bestimmt sind; zu einem Rad gehören also insbesondere der Reifen, die Felge mit Felgenkranz und Feigenschüssel, das Ventil, die Habe, evt. dort eingebaute Dichtungs- und/oder Sicherungsringe, Bremsscheiben, ABS-Polräder und ggf. Antriebswellen.

Die Erfindung bemüht sich um eine Hebung des Sicherheitsniveaus von Kraftfahrzeugen auf bereiften, insbesondere luftbereiften Rädern, die zumindest in der Längsrichtung, meistens auch in der Querrichtung (Eine der wenigen Ausnahmen ist die berühmte luftbereifte Métrolinie in Paris), Kräfte gegenüber einer Straße oder dergleichen nur durch Reibschluß übertragen können. Zwar wird in den meisten Betriebszuständen der maximal mögliche Reibschluß gar nicht in Anspruch genommen, doch wo immer es gilt auf unvorhergesehene Vorkommnisse, zum Beispiel auf ein ins Schleudern geratendes vorausfahrendes Fahrzeug oder auf ein auf die Straße gelaufenes Kind, gefahrenabwehrend zu reagieren, kommt es auf die Erreichbarkeit großer Beschleunigung an, insbesondere mit negativem Vorzeichen, also starkes Bremsen.

Es ist bekannt, daß die Höhe der größtmöglichen Beschleunigung im wesentlichen von dem Reibungsbeiwert zwischen den Reifen und der Straße abhängt. Es ist ferner bekannt, daß dieser Reibungsbeiwert von der Werkstoffpaarung Straße/Reifen, meistens Asphalt/Gummimischung, dem Luftdruck, der Latschlänge und dem Laufflächenprofil und der Witterung beeinflußt wird. Weiterhin ist bekannt, daß der Reibungsbeiwert eine Funktion des Schlupfes ist. Unter Schlupf wird die Differenz Reifenumfangsgeschwindigkeit minus Achsschenkelgeschwindigkeit verstanden, dividiert durch die Achsschenkelgeschwindigkeit.

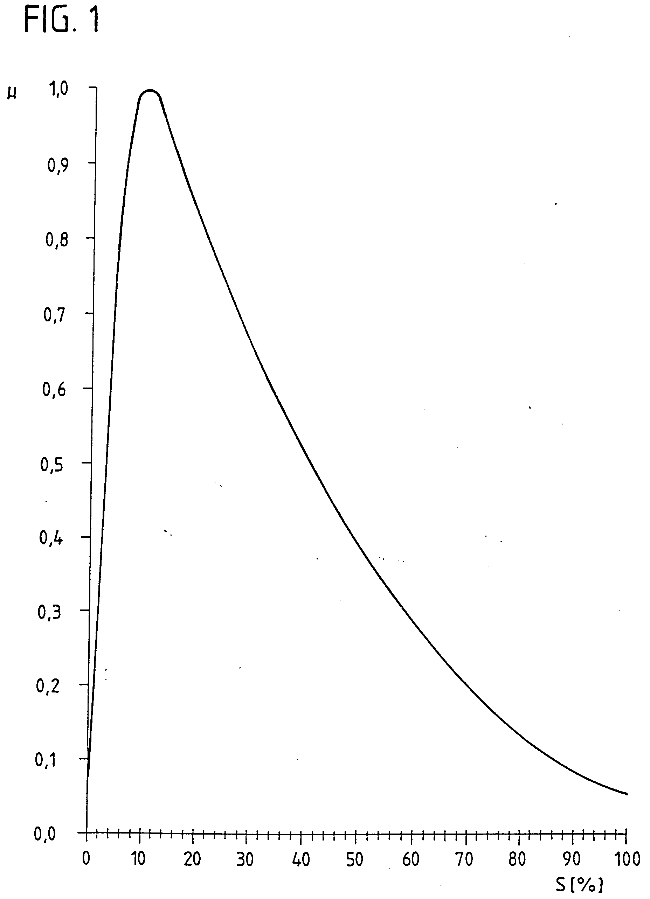

Figur 1 zeigt für die übliche Reibwerkstoffpaarung bei typischen Randbedingungen einen Verlauf des Reibungsbeiwertes $\mu_{\text{längs}}$ über dem Schlupf, nachfolgend kurz Schlupfkurve genannt. Der maximale Längs-Reibungsbeiwert wird bei einem Schlupfbetrag von etwa 10 % erreicht. Wird der Schlupf noch weiter erhöht, was beim Bremsen durch eine Erhöhung des Bremsmomentes erreicht würde, würde der Reibungsbeiwert und damit die wirksame Längskraft nicht etwa weiter ansteigen sondern im Gegenteil abnehmen. Dies hätte nicht nur das Problem, dass die Bremsverzögerung augenblicklich abnähme, sondern würde überdies dazu führen, dass bei Aufrechterhaltung des zu hohen Bremsmomentes die Raddrehfrequenz und damit die Reifenumfangsgeschwindigkeit rasch bis auf Null abnähme (umso rascher, desto kleiner das Trägheitsmoment des Rades ist - und es ist recht klein im Verhältnis zur Fahrzeugmasse). Der Betriebszustand, in dem das Rad nicht mehr rotiert trotz noch vorhandener Achsschenkelgeschwindigkeit, wird als "Blockieren" bezeichnet. Der Schlupf beträgt dabei -100 %.

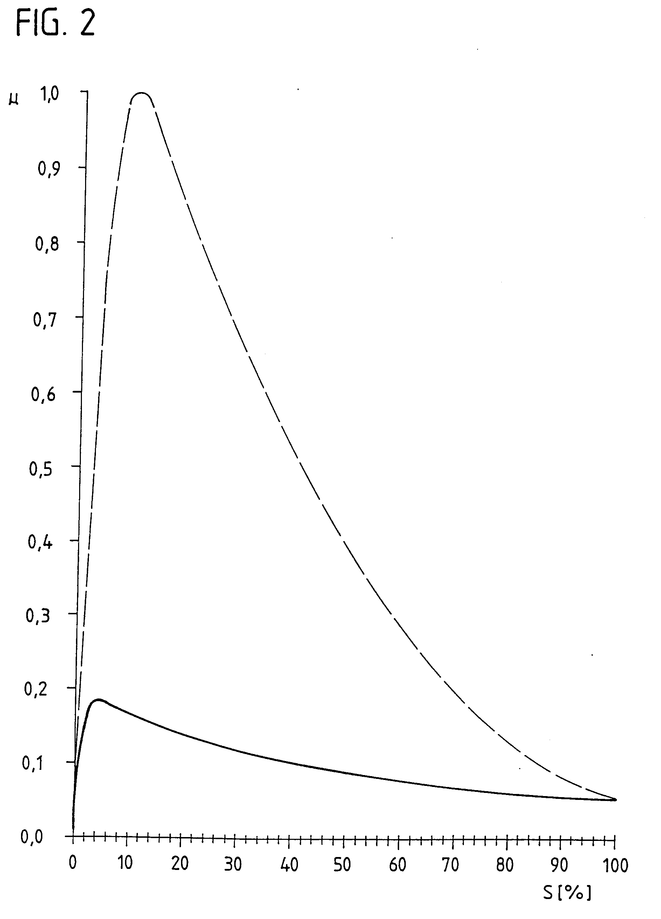

Figur 2 zeigt in duchgezogener Linie die Schlupfkurve für den gleichen Reifen gegenüber kaltem Eis (bei wärmerem Eis ungünstiger) und zum Vergleich in dünn gestrichelter Linie nochmal die Schlupfkurve gemäß Figur 1. $\mu_{\text{max}}$ liegt nicht nur viel niedriger, sondern fällt auch bei kleinerem Schlupf an.

Die schon bei leicht überhöhtem Bremsmoment der Fahrzeugverzögerung davonlaufende Drehverzögerung des Rades vergrößert noch das Übel des zunächst nur etwas zu großen Bremsschlupfes: Von beispielsweise -14 % nimmt er rasant auf -100 % betragsmäßig zu. Wegen dieser Wirkung eines Überschreitens des Schlupfes, zu dem der maximale Reibungsbeiwert gehört, wird der Bereich jenseits dieses Schlupfes von den Fachleuten häufig auch als der instabile Schlupfbereich bezeichnet; der Schlupfbereich zwischen Null und jenem Werte hingegen wird als stabil bezeichnet. Der Schlupf, zu dem der maximale Reibungsbeiwert gehört, wird auch als der kritische Schlupf bezeichnet.

Der gleiche Sachverhalt gilt auch bei übergroßem Antriebsschlupf. Auch durchdrehende Antriebsräder beeinträchtigen die Fahrzeugsicherheit, wenngleich meistens nicht so gravierend wie blockierend gebremste Räder. Zumindest bei den üblichen ungesperrten Differentialgetrieben bricht die Antriebskraft nicht - wie beim Bremsen - radweise, sondern achsweise ein, weil der größte Teil der Antriebsleistung an das durchdrehende Rad geht. Bei ungesperrten Zwischenachsdifferentialen würde die Antriebskraft sogar fast vollständig zusammenbrechen.

Neben dem Abfall der übertragbaren Längskraft - sowohl beim Blockierbremsen wie auch bei durchdrehenden Antriebsrädern - ist die Fahrzeugsicherheit in solchen Betiebszuständen durch den - im Falle des Blockierbremsens vollständigen - Verlust der Fähigkeit, Seitenkräfte zu übertragen, beeinträchtigt. Zur Kursstabilität trägt deshalb im wesentlichen nur noch die translatorische Massenträgheit und das Massenträgheitsmoment um die Fahrzeughochachse bei; Lenkmanöver sind unmöglich.

Wegen der großen Bedeutung der Einstellung des richtigen Schlupfes beim Erfordernis größtmöglicher positiver oder negativer Beschleunigung und wegen der Tatsache, daß ein Mensch als Regler üblicherweise nur - wie beim Motorrad - maximal zwei Räder gleichzeitig im optimalen Schlupfbereich zu halten vermag, bei allen anderen Kraftfahrzeugen einschließlich Flugzeugen in der Regel sogar nur ein Bedienungsorgan für die ganze Vielzahl von Radbremsen vorhanden ist, begann in den vierziger Jahren dieses Jahrhunderts - zunächst für die Bremsanlagen von Flugzeugfahrwerken - die Entwicklung von Schlupfregelsystemen, also von Systemen, wo eine technische Vorrichtung die Funktion des Regelns dem Menschen abnahm. Bei Verwendung solcher Systeme gibt der Mensch durch die Dosierung eines Hebeldruckes oder Hebelweges oder Pedaldruckes oder Pedalweges oder dergleichen nur noch seinen Willen zur Bemessung der Sollgröße, beispielsweise der Bremsbeschleunigung, kund.

Dem Regelsystem hingegen wird die Aufgabe übertragen, für jedes Rad individuell den günstigsten Schlupf einzustellen. Die meisten Schlupfregelsysteme treten erst in Funktion, wenn an einem Rad nahezu der kritische Schlupf erreicht ist; durch Verhinderung eines weiteren Anstieges des Brems- bzw. Antriebsmomentes wird das Blockieren bzw. Durchdrehen verhindert. Ist der kritische Schlupf mal überschritten worden - zum Beispiel dadurch, dass das Rad plötzlich auf eine schlechtere Reibpaarung gerät wie Blaubasalt oder dergleichen - vermindert das Regelsystem das Brems- bzw. Antriebsmoment so weit und so lange, bis sich der Schlupf wieder knapp unter dem kritischen Schlupf einstellt.

Schlupfregelvorrichtungen werden seit etwa 8 Jahren in der Serienfertigung von PKW, LKW und Anhängern eingesetzt mit weiter steigendem Marktanteil. Insoweit sie nur den Bremsschlupf regeln, hat sich für sie die Abkürzung "ABS" eingebürgert (von Anti-Blockier-System). Schlupfregelsysteme beweisen ihre Wirksamkeit besonders eindrucksvoll in solchen Fahrsituationen, wo eine Radspur auf einem Untergrunde mit schlechtem maximalem Reibungsbeiwert läuft während eine andere Radspur auf einem Untergrunde mit hohem maximalem Reibungsbeiwert läuft.

Die in der Serienfertigung von Fahrzeugen gebräuchlichen Schlupfregelsysteme erfassen sehr genau die aktuelle Drehzahl eines jeden Rades. Dazu ist jedes Rad mit einem sogenannten Polrad versehen, dass in einer Umfangslinie eine Vielzahl von Marken enthält, deren Passieren an einem nicht-rotierend angeordneten Sensor vorbei durch Änderung des magnetischen Flusses erkannt wird. Aus der Zeitspanne zwischen dem Passieren zweier aufeinander folgender Marken des Polrades berechnet der Mikrocomputer des Steuergerätes die Raddrehzahl und nach Multiplikation mit dem gespeicherten Abrollumfang die Reifenumfangsgeschwindigkeit.

Aus diesen Daten berechnet das elektronische Steuergerät ferner die Änderung der Raddrehzahl oder der Reifenumfangsgeschwindigkeit über der Zeit.

Zur Erkennung des aktuellen Schlupfes benötigt jedes Schlupfregelsystem eine Information über die Achsschenkelgeschwindigkeit. Weil in den meistens interessierenden Betriebszuständen die Geschwindigkeitsunterschiede zwischen den Achsschenkeln (kurveninnere etwas langsamer als kurvenäußere) gering sind, setzen die den Erfindern bekannten Schlupfregelsysteme alle Achsschenkelgeschwindigkeiten gleich der (translatorischen) Fahrzeuggeschwindigkeit. Aber auch damit verbleibt noch das Problem, eben diese Fahrzeuggeschwindigkeit zu bestimmen.

Zu diesem Zwecke bestimmt das Steuergerät aus den Drehzahlen oder Umfangsgeschwindigkeiten einer Vielzahl von - in der Regel: aller - Rädern des Fahrzeuges die maximale (beim Bremsen) beziehungsweise die minimale (beim positiven Beschleunigen). Zwar korreliert diese Extremgeschwindigkeit bzw. Extremdrehzahl tatsächlich von allen Raddrehungsinformationen noch am besten mit der Fahrzeuggeschwindigkeit, jedoch kann sie trotzdem nur als fiktiv bezeichnet werden, solange sie nicht schlupffrei, das heißt aber frei von Brems- und Antriebsmomenten, gemessen wird. Aufbauend auf dieser ggf. fiktiven Fahrzeuggeschwindigkeit berechnet das Steuergerät aus den Raddrehungsinformationen der einzelnen Räder für jedes Rad individuell den Schlupf.

Wenn ein Fahrzeug über längere Zeit mit Schlupf an allen vier Rädern abgebremst wird, wird die mögliche Abweichung zwischen der tatsächlichen Fahrzeuggeschwindigkeit und der wie oben angegeben fiktiv berechneten immer größer, die Informationsgrundlage also immer zweifelhafter. Wenn aber die Fahrzeuggeschwindigkeit nicht mehr zuverlässig ermittelt wird, verliert das System die zum einwandfreien Betrieb notwendige Information über den individuellen Radschlupf und die Qualität der Regelung sinkt. Diese Probleme existieren für Antriebsschlupfregelsysteme genauso wie für Bremsschlupfregelsysteme, wenn keine Achse unangetrieben ist.

Diese Probleme können überwunden werden, wenn in hinreichend kurzen Zeitabständen zumindest ein Rad nahezu momentenfrei gestellt wird und sich dadurch die Umfangsgeschwindigkeit dieses Rades an die Fahrzeuggeschwindigkeit annähert (Stotterbremsen). Das Zeitintervall der Momentenfreistellung kann zwar umso kürzer gehalten werden, desto geringer das Trägheitsmoment des betreffenden Rades ist, aber die Trägheitsmomente von Rädern haben sich im PKW-Bereich in den letzten Jahren infolge breiterer Reifen und Felgen, stärkerer Bremsen und stärkerer Antriebsgelenke trotz zunehmender Verwendung von Leichtmetall für die Felgen nicht erniedrigt. Unvermeidbarerweise wird während einer Momentenfreistellung Brems- bzw. Beschleunigungsvermögen verschenkt.

Neben dem zuvor behandelten Vergleich der Rotationsgeschwindigkeiten ist zur Erkennung überkritischen Schlupfes an einem Rad auch - zusätzlich oder alternativ - der Vergleich der Rotationsbeschleunigungen bekannt. Übersteigt an einem Rade der Betrag der Rotationsbeschleunigung den Betrag der Rotationsbeschleunigung an den anderen Rädern, so wird dies als ein beginnendes Blockieren bzw. Durchdrehen interpretiert und das Brems- bzw. Antriebsdrehmoment dieses Rades herunter geregelt zu einem kleineren Betrag.

Aber auch bei dieser Messmethode entstehen Probleme, wenn - zum Beispiel beim plötzlichen Auftreten einer Öllache - sämtliche Räder von einer für den vorliegenden Reibungsbeiwert zu großen Rotationsbeschleunigung betroffen sind; solange die Rotationsbeschleunigungen nicht bis auf solche Werte angewachsen sind, die selbst bei $\mu=1$ nicht erreicht werden sollten, hilft auch eine zusätzliche Programmschleife mit einer Plausibilitätskontrolle nicht weiter. Aus der EP-A-0 363 570 von Japan Electronics ist es bekannt,

abweichend vom bisher dargestellten Stande der Technik zur Schlupfregelung auf Daten zurückzugreifen, die nicht ihrerseits schlupfbehaftet gemessen wurden. Insbesondere lehrt Japan Electronics die von jedem Rade übertragene Längskraft und Radlast zu messen. Die hier vorgeschlagene Erfassung der Längskraft ermöglicht die Feststellung der aktuellen Position in einer Schlupfkurve nicht nur von der Abszisse aus, also vom aktuellen Schlupfwert aus mit all den zuvor diskutierten Problemen in der erforderlichen Feststellung der Fahrzeuggeschwindigkeit, sondern von der Ordinate aus. Denn die gemessene Reifenlängskraft dividiert durch die Radlast ergibt den derzeitig anliegenden Reibungsbeiwert $\mu$, also die Ordinate der Schlupfkurve.

Die Messung der Längskraft und Radlast kann zum Beispiel durch Dehnungsmessstreifen an Längslenkern und Federbeinen erfolgen. Gemäß einer der zahlreichen Ausführungsformen soll zur Längskraftbestimmung der Effekt ausgenutzt werden, dass sich der Fahrzeugreifen bei angreifender Längskraft - also bei Angriff eines Drehmomentes um die Rotationsachse - etwas tordiert. Um die Stärke dieser Torsion zu messen, sollen auf der Reifenseitenwand radiale, geradlinige Marken angebracht sein, die optisch erfassbar sind. Bilderfassungsgeräte sollen sodann die Stärke der Markenverkrümmung, die bei der Reifentorsion eintritt, feststellen.

Die optische Erfassung setzt aber zumindest bei nächtlicher Fahrt eine - störanfällige und andere Fahrer irritierende - Lichtquelle voraus. Darüberhinaus erfordert die implizierte Bildverarbeitung sehr viel Speicherplatz. Vermutlich aus diesen Gründen hat sich diese Technik nicht durchgesetzt.

Immerhin deutet Japan Electronics mit der Längskraftbestimmung einen Weg an, der auf ein Erkennen des Fahrbahnbelages und eine Anpassung des Regelverhaltens der Schlupfregelvorrichtung an den Fahrbahnbelag hinausliefe.

Es ist eine Aufgabe der Erfindung, die Abhängigkeit von schlupfbehafteten Messgrößen mindestens zu verringern, vorzugsweise ganz zu überwinden durch Messung der übertragenen Längskraft unter Ausnutzung der Reifendeformation und unter Vermeidung eines Zwanges zur optischen Erfassung von Marken und einer Bildverarbeitung.

Die meisten reibschlüssig betriebenen Fahrzeuge benutzen Reifen, die ihre Tragfähigkeit und ihre optimalen Reibschlusswerte nur durch eine Füllung mit Druckluft erreichen; fällt der Reifenluftdruck unter einen von der Radlast abhängigen Wert, so wird auch hierdurch die Sicherheit beeinträchtigt. Deshalb sind schon viele Systeme zur Kontrolle des Luftdruckes vorgeschlagen worden; sie haben alle das Problem, dass die zu messende Größe, der Luftdruck, im rotierenden Rad anfällt, der Messwert aber in einem nicht rotierenden System verwertet werden soll, zum Beispiel zur Anzeige im Armaturenbrett.

Dementsprechend lassen sich alle luftdruckkontrollierenden Vorrichtungen in zwei Hauptgruppen unterteilen:

In einer ersten Gruppe sind die Vorschläge anzuordnen, wo der Reifeninnenraum über einen die Felge und Nabe durchsetzenden Kanal mittels schleifender Dichtung in den nicht rotierenden Achsschenkel mündet und von dort aus über einen Schlauch oder dergleichen in ein - also nicht rotierendes - Manometer mündet. Solche Systeme erlauben neben der eigentlichen Messung auch eine Behebung eines eventuell erkannten Fehlers: Ein - nicht rotierend angeordneter - Kompressor vermag Druckluft in den Reifeninnenraum in umgekehrter Richtung zu fördern. Der Nachteil aller Systeme dieser Gruppe ist die begrenzte Lebensdauer der unter Druck stehenden schleifenden Dichtung und der relativ große Leckstrom, der einen Kompressor nicht nur ermöglicht, sondern für die meisten Anwendungen geradezu fordert; das aber bringt zusätzliches Gewicht, gesteigerten Energieverbrauch und einen deutlich höheren Anschaffungspreis.

In einer zweiten Gruppe sind die Vorschläge anzuordnen, wo das Manometer im rotierenden Rad angeordnet ist und die von ihm gemessenen Daten in eine nicht-rotierende Auswertungseinheit geliefert werden. Diese Datenüberstellung kann zum Beispiel über Schleifringe oder über Funkkontakt erfolgen. In jedem Falle ist auch hierfür der Aufwand erheblich. Schleifringe erhöhen den Reibungswiderstand und erleiden einen die Lebensdauer begrenzenden Abrieb, Funksender benötigen eine Energiezufuhr ins rotierende Rad oder eine Energiequelle im rotierenden Rad, zum Beispiel eine Batterie.

Es ist deshalb zur Weiterbildung der Erfindung wünschenswert, auf einfache und zuverlässige Weise zusätzlich die Existenz ausreichenden Luftdruckes zu überprüfen.

Die Aufgabe wird gelöst durch ein Verfahren zur Bestimmung der an einem Reifen angreifenden Längskraft gemäß Anspruch 1 und durch eine Vorrichtung gemäß Anspruch 27, vorzugsweise in Verbindung mit einem Reifen gemäß Anspruch 44.

Das neue Verfahren lässt sich mit den bekannten Verfahren kombinieren und ermöglicht auch bei langanhaltenden Bremsungen oder Allradbeschleunigungen eine verbesserte Plausibilitätskontrolle der aktuellen Raddrehbeschleunigungen.

Bei Beibehaltung der üblichen Drehgeschwindigkeitserfassung und daraus abgeleiteten Drehbeschleunigungsberechnung lässt sich das Brems- bzw. Antriebsdrehmoment so regeln, dass die gemessene Raddrehbeschleunigung mit der aus der Längskraft und damit Fahrzeugbeschleunigung bestimmten zumindest annähernd übereinstimmt.

Ferner ist eine Schwingungsüberlagerung auf den vom Fahrer zunächst gewählten Bremsleitungsdruck zu empfehlen, was sich - abgesehen vom kritischen Punkt der Schlupfkurve - in einer periodischen Schwankung jeder Radlängskraft niederschlagen muss. Im stabilen Bereich, auch unterkritischer Bereich genannt, führt eine Bremsleitungsdruckerhöhung zu einer nur kurz und vor allem bestimmbar hinterhereilenden Längskrafterhöhung während im instabilen Bereich, auch überkritischer Bereich genannt, die umgekehrte Beziehung gilt oder - bei einigen Straßenbelägen - überhaupt keine Korrelation mehr festzustellen ist. Dabei kann die Amplitude der Bremsleitungsdruckschwankung erstaunlich klein gewählt werden im Verhältnis zu dem Bremsleitungsdruck, der dem maximal sinnvollen Bremsmoment entspricht, vorzugsweise 3 % bis 6 %. Der hierdurch bewirkte Bremsleistungsverlust ist wesentlich kleiner als der bei den bisherigen Systemen durch das Stotterbremsen.

In Kombination mit den bisherigen Schlupfregelsystemen ist zudem durch Datenvergleich beider Messverfahren die rasche automatische Anpassung der angewendeten Schlupfkurve an die tatsächlichen Verhältnisse möglich: Regelt beispielsweise ein konventionelles Schlupfregelsystem einen Schlupf von 9 % ein - in der Erwartung, ein $\mu$ von etwa 0,85 zu erreichen - und offenbart die Längskraftmessung beispielsweise ein $\mu$ von lediglich 0,3, so ist erkannt, dass eine andere Schlupfkurve zugrunde gelegt werden muss. Es ist möglich, in der Auswerteeinheit eine Vielzahl von Schlupfkurven zu hinterlegen und beim Auftreten eines solchen Falles die für jedes Rad am besten passende automatisch auswählen zu lassen; es ist aber auch in Kombination mit den bislang bekannten Schlupfregel-Systemen über die Raddrehzahlmessung möglich, durch gezieltes Ausmessen charakteristischer Wertepaare von Schlupf und $\mu$ - für jedes Rad individuell - fortlaufend die angewendete Schlupfkurve zu aktualisieren.

Japan Electronics lehrt, die am Reifen angreifende Längskraft aus der Torsionsdeformation des Reifens zu bestimmen und zwar mit einer Stellung des Bilderfassungsgerätes senkrecht unter der Rotationsachse des Rades. Die Erfinder haben erkannt, dass auch in anderen Stellungen der die Messorgane enthaltenden Ebene Torsionsdeformationen messbar sind und, dass die Stärke der bei einer bestimmten Radbelastung erfassten Torsionsdeformation von der Stellung der die Messorgane enthaltenden Ebene senkrecht zur Rotationsachse abhängt. Die Torsionsdeformation ist zwischen einem radial inneren Bereich des Rades und einem radial äußeren Bereich des zu diesem Rade gehörenden Reifens in mindestens einer nicht-rotierenden Stellung der die Messorgane enthaltenden Ebene zu bestimmen.

Wenn die örtliche Torsionsdeformation nur in einer einzigen Stellung gemessen wird - was für die Längskraftbestimmung ausreichend ist - so sollte dies die fahrzeugsenkrechte Stellung über der Rotationsachse sein. Dies Stellung wird nachfolgend als 0° bezeichnet. Für die örtliche Torsionsdeformation wird im Rahmen dieser Anmeldung auch der Begriff der Reifenverzerrung verwandt.

Zur Erklärung dieses Meßprinzips sei zunächst einmal stark vereinfachend angenommen, daß die zum Reibkraftaufbau erforderliche Normalkraft nicht etwa nur in einem eng umrissenen Latsch (=footprint) aufträte - was den Tatsachen entspräche -, sondern über der ganzen Lauffläche verteilt. Dann hätte die Lauffläche keinerlei Veranlassung, sich zu einem Unrund zu verformen oder sich irgendwo exzentrisch einzustellen; gleichwohl würde es aber zu einer Verdrehung zwischen der Reifenlauffläche und dem Reifenwulst kommen. (Genau genommen auch noch zu einer Verdrehung zwischen Felgenkranz und Radnabe, jedoch ist diese Verdrehung aufgrund der wesentlich höheren Steifigkeit des Metalles deutlich geringer.) Dieser Effekt ist besonders deutlich bei der heute vorherrschenden Bauform von Luftreifen, nämlich mit einer recht torsionswilligen Radialkarkasse und einem zug- und drucksteifen Paket von Gürtellagen.

Der Verdrehwinkel steigt streng monoton über dem die Verdrehung bewirkenden Drehmoment; diese Beziehung kommt sogar einer Linearität überraschend nahe.

Gemäß einem Ausführungsbeispiel soll die Ausreichendheit des Luftdruckes kontrolliert werden. Die Erfinder haben erkannt, daß hierfür die Messung des Luftdruckes unnötig aufwendig und unnötig aussageschwach ist:

Ein etwas niedrigerer Luftdruck, als im Betriebshandbuch für normale Beladung vorgesehen, kann unschädlich sein bei extrem niedriger Beladung; umgekehrt kann selbst der Normalluftdruck zu gering sein bei extrem hoher Beladung mit dem Ergebnis zu großer Reifenwalkarbeit und deshalb zu großer Reifenerhitzung und dadurch bewirkter Polymerdegradation. Eine Kontrolle nur des Luftdruckes ließe die Abhängigkeit des erforderlichen Luftdruckes von der Radlast unberücksichtigt.

Die Erfinder haben erkannt, dass zur Überwachung des sicheren Betriebes eines luftbereiften Rades besser die Walkarbeit pro Umdrehung erfasst werden sollte. Diese ist nahezu proportional sowohl zu der Reifeneinfederung, als auch zur Latschlänge als auch zum Verhältnis der aufgenommenen Radlast zum Reifenluftdruck, nachfolgend kurz Last-Druck-Verhältnis genannt.

Beim Ausführungsbeispiel gemäß Anspruch 2 wird vorgeschlagen, eine zur Walkarbeit pro Umdrehung etwa proportionale Größe dadurch zu bestimmen, dass diese Größe, nämlich die Reifeneinfederung oder die Latschlänge oder das Last-Druck-Verhältnis, aus der von der Stellung abhängigen Torsions-Deformation des Reifens zwischen einem radial inneren Bereich des Rades - zum Beispiel dem Wulstbereich des Reifens oder dem axial inneren Felgenhorn oder der Radnabe - und einem radial äußeren Bereich des Reifens in mindestens zwei (natürlich voneinander verschiedenen) nicht-rotierenden Stellungen der die Messorgane enthaltenden Ebene bestimmt wird. Dabei muss mindestens eine der beiden Messstellungen nicht senkrecht über oder unter der Radachse liegen. Vorzugsweise werden dabei Stellungen von etwa 180° vermieden. Besonders bevorzugt sind die Stellungspaarungen 0° und 90°, 90° und 270° sowie 270° und 0°. Hier ist die Datenverarbeitung besonders einfach, wie nachfolgend erläutert werden soll:

Herkommend von dem Gedankenversuch Längskraftübertragung ohne Radlast, der im fünften und sechsten Absatz hiervor beschrieben wurde, wird nun wieder auf die - realistische - Normalkrafteinleitung allein im Latsch zurückgegangen:

Es wird klar, daß eine Verdrehung zwischen radial äußerem und radial innerem Reifenbereich infolge eines Brems- oder Antriebsdrehmomentes auch so auftreten muß, allerdings überlagert mit Deformationen aufgrund des ungleichmäßig verteilten Radlastangriffes. - Zur Vereinfachung der Erklärung nun ein zweiter Versuch: Radlasteinleitung ohne Längskraft (Dieser Fall ist sogar realistisch, nämlich bei brems- und antriebslosem Rollen):

Der Radlastangriff an der Reifenlauffläche führt nicht nur zu einer Laufflächenabplattung im Latsch sondern auch - insbesondere im Zusammenspiel mit zug- und drucksteif kombinierten Gürtellagen - zu einer Laufflächenverformung im übrigen Umfang des Reifens: Abgesehen von dem kleinen Bereich des Latschein- und -auslaufes und natürlich des Latsches selbst behält der übrige Laufflächenbereich im wesentlichen seine Kreisform bei, jedoch um einen kleinen, zur Radlast etwa proportionalen Betrag exzentrisch zur Rotationsachse nach oben verschoben. Dieser Deformationsanteil erscheint in der 0° Stellung als reiner "Zug", das heißt als eine Deformation hin zu größerem Radius gemessen von der Rotationsachse aus, in der 180° Stellung als reiner Druck und in den Stellungen 90° und 270° als Verschiebung in der Umfangsrichtung, die sich phänomenologisch von einer örtlichen Torsion nicht unterscheiden läßt. Während jedoch die Torsion aufgrund eines Drehmomentes ohne Radlast sich über dem gesamten Umfange gleichmäßig einstellt nach Betrag und Orientierung, stellt sich die Torsion aufgrund einer Radlast ohne Drehmoment ähnlich einer Sinusschwingung ein: in der 0°-Stellung (Zug) zu 0 (Deshalb bei Messung in nur einer Stellung von hierher auf das angreifende Drehmoment bzw. die Längskraft schließen!), in der 90° Stellung je nach Vorzeichenvereinbarung zu einem positiven oder negativen Maximum, in der 180°-Stellung (Druck) wieder 0 (Dort jedoch Verletzungsgefahr durch Bordsteinkanten etc.) und in der 270°-Stellung zum Maximum gleichen Betrages wie in der 90°-Stellung, jedoch mit umgekehrtem Vorzeichen.

Besonders bevorzugt ist die Stellungskombination 90° und 270°, weil so die walkarbeits-proportionale Größe die Differenz beider Meßwerte ist (was auf eine Addition zweier etwa gleich großer Beträge hinausläuft, weil einer der beiden Meßwerte ein negatives Vorzeichen hat) und aufgrund des so besonders großen Gesamtsignals im Vergleich zu unvermeidbaren Meßfehlern.

Die verschiedenen Größen, Radlast einerseits und walkarbeitsproportionale Größe andererseits, bewirken gut unterscheidbare örtliche Torsionsdeformationen in verschiedenen Stellungen. Sie erfüllen sehr gut die Regeln einer linearen Superposition. In der zuletzt diskutierten 90°/270°-Stellungskombination zum Beispiel ergibt sich die Längskraft aus der Summe beider Meßwerte, die walkarbeitsproportionale Größe aus der Differenz.

Mit Ausnahme der Kombination 0°/180° ist auch jede andere Stellungskombination sowohl zur Erkennung der Längskraft als auch der walkarbeitsproportionalen Größe möglich durch Programmierung der oben beschriebenen sinusförmigen Winkelbeziehungen in der Auswerteeinheit. Vorzugsweise dient gemäß Anspruch 7 ein Verfahren mit Torsionsmessung in zwei Stellungen nicht nur der Bestimmung einer der beiden Größen Längskraft und Walkarbeitsproportionale, sondern beiden.

Wird in noch mehr Stellungen gemessen, kann die dadurch bewirkte Redundanz zur Bestimmung der gewünschten Größen auf unterschiedlichen Wegen genutzt werden. Dies führt nicht nur zu einer Senkung der Ausfallwahrscheinlichkeit sondern erlaubt auch - solange nicht so viele Sensoren ausgefallen sind, daß keine Redundanz mehr besteht - eine Mittelung der auf verschiedenen Wegen ermittelten Ergebnisse betreffend der selben Größe, sodaß die Genauigkeit des Endergebnisses noch weiter ansteigt. Ferner ist ab dem Überschreiten einer vorgewählten Differenz zwischen den auf verschiedenen Wegen ermittelten Ergebnissen zur gleichen Größe die warnende Anzeige einer Funktionsstörung am Armaturenbrett sinnvoll.

Die bisherigen Ausführungen zeigen, dass die Messung der örtlichen Reifentorsion geeignet ist sowohl zur Längskraftbestimmung als auch zur Überwachung des jeweils erforderlichen Luftdruckes. Besonders elegant erscheint, dass ein solches Messverfahren beides gleichzeitig erfüllen kann.

Der oder die radial innere(n) Sensor(en) kann bzw. können sehr weit radial innen angeordnet sein, sogar - und dieser Fall ist durchaus attraktiv - auf der Zylindermantelfläche oder einem Bund (das erhabene Gegenstück zu einer Nut) des Achsschenkels. Die hiermit zusammenwirkende(n) Marke(n) müßte sich dann in oder an der Nabe befinden, zum Beispiel integriert in einen Dichtring.

Selbstverständlich kann bzw. können die radial innere(n) Marke(n) auch weiter radial außen angeordnet sein, zum Beispiel in der Nähe des fahrzeuginneren Felgenhornes, solange nur ein ausreichender radialer Abstand zu der bzw. den radial äußeren Marke(n) verbleibt, denn die Meßsignale sind umso größer, desto größer der radiale Abstand der Punkte ist, durch die jeweils eine Radiale geht, deren Phasenlage zueinander erfindungsgemäß erfaßt wird. Wesentlich ist aber, daß der oder die Sensor(en) auf gleichem Radius zur Rotationsachse angeordnet sind wie die hiermit zusammenwirkende(n) Marken.

Bei einigen Radaufhängungen empfiehlt sich der Einfachheit halber, den oder die radial äußeren Sensor(en) an Querlenker(n) der Radaufhängung anzuordnen.

Das Meßprinzip beruht darauf, daß bei positiver Beschleunigung die radial außen angeordnete(n) Marke(n) um eine gut meßbare Zeitdifferenz delta t verzögert den oder die hiermit zusammenwirkenden Sensor(en) passiert im Vergleich zu dem oder den Passierzeitpunkt(en) der radial weiter innen angeordneten Marke(n) vorbei an deren Sensor(en). Bei negativer Beschleunigung, also beim Bremsen, passiert bzw. passieren hingegen die äußere(n) Marke(n) den bzw. die zugeordnete(n) Sensor(en) entsprechend früher oder, umgekehrt ausgedrückt, die innere(n) Marke(n) später.

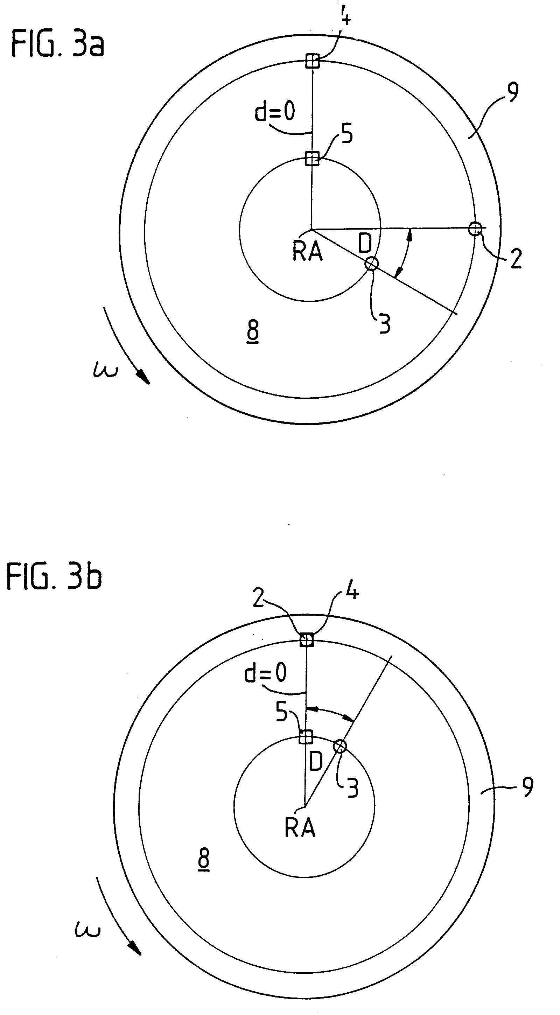

Zur noch intensiveren Erläuterung sei anhand der Figuren 3a bis 3d als Beispiel ein einfacher Fall behandelt, daß nämlich ein Paar von Sensoren 4 und 5, angedeutet durch je ein kleines Quadrat, starr in der 0°-Stellung angeordnet sei, also in der fahrzeugsenkrechten Radialen über der Rotationsachse, und zwei hiermit zusammenwirkende Marken 2 und 3, angedeutet durch je einen kleinen Kreis, auf entsprechenden voneinander verschiedenen Radien R2 und R3 am rotierenden Rad.

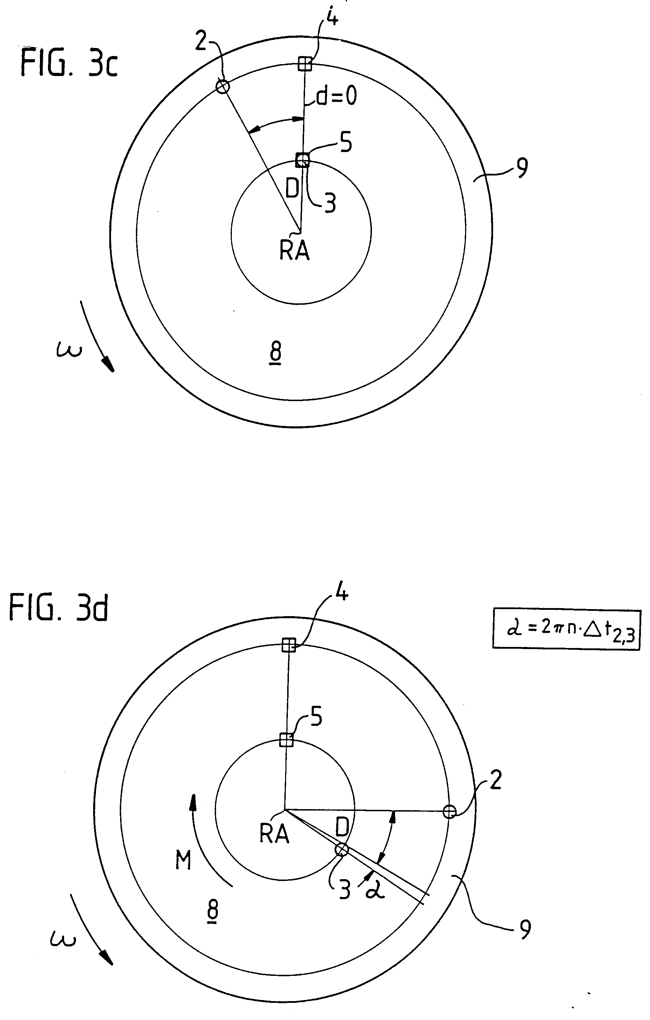

Die beiden Marken befinden sich in diesem Beispiel nicht auf einer gemeinsamen Radialen (die Erstreckung in der Axialen mitbetrachtend noch korrekter auch "Phasenebene" genannt); vielmehr sind sie um einen Differenzwinkel D gegeneinander versetzt, der in diesem Beispiel 30° = pi/6 beträgt. Bei konstanter Drehzahl n = 1/T - wobei T die Periodendauer, also die Zeit für einen Radumlauf, ist - beträgt die Zeitspanne zwischen dem Passieren der voreilenden Marke 2 vorbei am Sensor 4, welches die Figur 3b zeigt, und dem Passieren der Marke 3 vorbei am Sensor 5, welches Figur 3c zeigt, allgemein

$$t_{2,3} = T \times D/2pi \text{ also hier gleich } T/12.$$

Wenn - zum Beispiel erreicht durch eine negative Beschleunigung, also ein angreifendes Bremsmoment - die innere Marke 2 sich um einen Winkel Alpha um die Rotationsachse RA gegenüber dem Drehsinn nach hinten verlagert, führt dies zu einer Verlängerung der Zeitspanne $t_{2,3}$ um den Betrag

$$delta\ t_{2,3} = T \times Alpha/2pi = Alpha/(2\ pi\ n).$$

Die Schwankung des Ergebnisses der Zeitspannenmessung korreliert also in diesem Beispiel mit dem örtlichen Torsionswinkel Alpha.

Wenn man noch - was am ehesten Bedeutung hat für die Messung der wie auch immer genannten walkarbeitsproportionalen Größe - berücksichtigt, dass sich der örtliche Torsionswinkel Alpha über den in diesem Beispiel gezeigten 30°-Intervall etwas ändert, muss man genau sagen, dass die zu messende Schwankung der Zeitspanne $t_{2,3}$ nicht mit dem Torsionswinkels Alpha selbst, sondern mit dessen Mittelwert linear korreliert in der Stellung - hier 15° - zwischen dem Beginn und dem Ende der Zeitspannenmessung. Wollte man also ein optimales Korrelat zur Torsionsdeformation in der 0° Stellung haben, wäre es vorteilhaft bei ansonsten unverändertem Beispiel, die gemeinsame Phasenebene der beiden Sensoren um 15° zu neigen. Die bisher erfolgreich ausprobierten vorserienhaften Vorrichtungen kommen allerdings mit einem Markendifferenzwinkel von 3° aus (Die tatsächlichen Verhältnisse hätte man aber nicht mehr anschaulich zeichnen können), sodass selbst ohne Berücksichtigung dieser Feinheiten die gelieferten Messergebnisse außerordentlich genau die Realität wiedergeben.

Wie bereits gesagt, korrelieren die Torsionswinkel Alpha wiederum - in Abhängigkeit von den gewählten nicht-rotierenden Messstellungen - mit der zu messenden Längskraft bzw. der walkarbeitsabhängigen Größe. Damit ist gezeigt, dass und in welcher Weise die Zeitspannenmessung geeignet ist, um eine oder beide gewünschten Größen zu bestimmen. Auch sind die nötigen Vorrichtungen so weit beschrieben, dass der Durchschnittsfachmann zur Verfahrensdurchführung geeignete Vorrichtungen zu bauen vermag, zumal zeitnehmende Schaltungen im Stande der Technik bekannt sind, auch von den konventionellen Schlupfregelsystemen her.

Gegenüber konventionellen Systemen liegt der Vorteil der Erfindung in der höheren Aussagesicherheit auch unter schwierigen Bedingungen. Gegenüber einer den Verformungsweg oder die Verformungsspannung im rotierenden Rad messenden Vorrichtung liegt der Vorteil darin, dass so die Messdaten von Anfang an nicht-rotierend sensiert werden, es also überhaupt keiner fehleranfälligen und/oder kostenträchtigen Datenübertragung von einem rotierenden in ein nicht-rotierendes Untersystem bedarf; unter diesem Aspekt besteht eine Ähnlichkeit zu den konventionellen Schlupfregelsystemen.

Gegenüber der vorbekannten Reifentorsionsmessung mittels optischer Erfassung und Auswertung der Krümmung langer, radial verlaufender Marken ist der wesentliche Vorzug des erfindungsgemäßen Verfahrens, dass Zeitspannenmessungen ein besonders günstiges Verhältnis zwischen Genauigkeit, Langlebigkeit und Zuverlässigkeit einerseits und Anschaffungskosten andererseits bereit stellen.

Zur Angabe der Funktionsweise wird die bereits gezeigte Gleichung

$$\text{delta } t_{2,3} = T \text{ x Alpha/2pi} = \text{Alpha/(2 pi n)}$$

nach Alpha aufgelöst. Sie lautet dann:

$$\text{Alpha} = (2pi/T) \text{ x delta } t_{2,3} \text{ oder}$$

$$\text{Alpha} = 2 \text{ pi n x delta } t_{2,3}.$$

Für die Angabe der Längskraft und der walkarbeitsabhängigen Größe sind, wenn man es gemäß Anspruch 22 äußerst genau nehmen will, Kalibrier-Funktionen, die übrigens streng monoton sind, in der Auswertungseinheit zu hinterlegen und zu verwenden; erste Versuche haben jedoch gezeigt, dass bereits mit einem simplen Proportionalitätsfaktor - entsprechend einer linearen Kalibrierfunktion - eine erstaunlich hohe Messgenauigkeit erreicht wird. Wenn man die - in der Regel leicht progressive - Kalibrierfunktion noch genauer ermitteln und verwenden will, so ist dies eine dem Fachmann geläufige Routine-Arbeit.

Die bisherigen Ausführungen zusammenfassend kommt es gemäß Anspruch 4 darauf an, dass

a) in einem radial äußeren Bereich des zum Rad gehörenden Reifens der Zeitpunkt (die Zeitpunkte) des Passierens einer oder mehrerer am Reifen angeordneter Marke(n) vorbei an mindestens einem äußeren, nicht-rotierenden Sensor registriert wird (werden), nachfolgend äußerer (äußere) Zeitpunkt(e) genannt, und

b) in einem radial weiter inneren Bereich des Rades der Zeitpunkt (die Zeitpunkte) des Passierens einer oder mehrerer am Rad - zum Beispiel im Reifenwulstbereich oder an der Felge oder, bevorzugt, in der Radnabe - angeordneten Marke(n) vorbei an zumindest einem inneren, nichtrotierenden Sensor registriert wird (werden), nachfolgend innerer (innere) Zeitpunkt(e) genannt, und

c) die Zeitspanne(n) zwischen dem (den) äußeren Zeitpunkt(en) und dem (den) inneren Zeitpunkt(en) gemessen und ausgewertet wird (werden)

d) wobei das Auswerten eine Division der gemäß c) gemessenen Zeitspanne(n) durch die weiterhin zu bestimmende Periodendauer T beinhaltet, wobei die Periodendauer die Zeitspanne für eine Radumdrehung oder ein bestimmter Bruchteil davon ist.

Dabei ist es gemäß Anspruch 5 möglich, dass das Passieren einer inneren Marke an einem inneren Sensor vorbei jeweils eine Zeitspannenmessung, vorzugsweise mittels elektronischer Stoppuhr, auslöst und das Passieren einer äußeren Marke an einem äußeren Sensor vorbei diese Zeitspannenmessung stoppt. Es ist aber gemäß Anspruch 6 auch umgekehrt möglich, dass das Passieren einer äußeren Marke an einem äußeren Sensor vorbei eine Zeitspannenmessung, vorzugsweise mittels elektronischer Stoppuhr, auslöst und das Passieren einer inneren Marke an einem inneren Sensor vorbei die Zeitspannenmessung stoppt.

Es sollte dasjenige Passieren die Zeitspannenmessung stoppen, das die kleinere Fehlerwahrscheinlichkeit hat, weil dann die Wahrscheinlichkeit fehlerhaft zu großer Zeitspannenmessergebnisse minimiert ist. In einem solchen Fehlfalle würde also nicht etwa ein fehlerhaftes, sondern gar kein Messsignal geliefert. Dies erlaubt eine leichte Fehlererkennung und vermeidet Falschaussagen.

Eine Anordnung von inneren Marken und Sensoren im Bereich der Radnabe, besonders in der gut geschützten Radnabe selbst, scheint nach den bisherigen Erfahrungen zu einer extrem geringen Fehlerwahrscheinlichkeit zu führen; deshalb sollte bei einer solchen Anordnung, gemäß Anspruch 6, die Stoppfunktion innen liegen. Sind aber die inneren Marken und Sensoren im Bereich des Felgenhornes angeordnet, scheint deren Funktion eine etwas größere Fehlerwahrscheinlichkeit zu ergeben (zum Beispiel Felgenhornverletzung durch forsches Überfahren von Bordsteinkanten) als das Zusammenwirken der äußeren Marken und Sensoren; deshalb empfiehlt sich hier eine Funktionsverteilung gemäß Anspruch 5.

Wie bereits erwähnt, wird der Differenzwinkel zwischen einem Markenpaar in dieser Anmeldung mit "D" bezeichnet; im Beispiel nach den Figuren 3 betrug D 30°. Es ist aber auch ein Differenzwinkel zwischen den Phasenebenen der Sensoren eines Sensorpaares möglich; dieser wird in dieser Anmeldung mit "d" bezeichnet. Dieser Winkel d war in den Figuren 3 der Einfachheit der Erklärung halber zu Null gesetzt. Da man aber zur Erzielung günstiger Kosten einer erfindungsgemäßen Vorrichtung gerne die erforderlichen Sensoren auf ohnehin vorhandenen Teilen der Radaufhängung plazieren würde, wird dieser Sensorpaardifferenzwinkel häufig ungleich 0 sein. Die auf Seite 21 am Ende des zweiten Absatzes angegebene Gleichung

$$t_{2,3} = T \text{ x D/2pi}$$

ist also für d ungleich 0 dahingehend zu verallgemeinern, dass

$$t_{2,3} = T \times (D-d)/2pi \text{ ist.}$$

Auf Seite 22, erster Absatz wurde bereits dargelegt, dass die Messgenauigkeit besonders hoch wird, wenn sowohl D als auch d dicht bei 0 liegen, im Extremfall gleich 0 sind. In diesem Falle, wie auch in jedem anderen Falle mit D-d gleich 0 ist die zu messende Zeitspanne $t_{2,3}$ im momentenfreien Falle gleich 0. Wird nun festgelegt, dass die äußere Marke 2 die Zeitspannenmessung aus löst und die innere sie stoppt, so wird bei einer Stellung von 0° des Sensorpaares für den Fall des Bremsens eine Zeitspanne $t_{2,3}$ gleich delta $t_{2,3}$ nahezu proportional zur Größe des Bremsmomentes und damit zur Größe der Längskraft gemessen, bei maximaler Beanspruchung etwa 1°.

Für den Fall einer positiven Beschleunigung hingegen wird nahezu die komplette Periodenzeit T angegeben. Schon weil im Vergleich zur sehr viel längeren, etwa um den Faktor 360 größeren, Periodenzeit die allein interessierende Differenz zu T vom Betrage her fast untergeht, wäre ein solches Messergebnis also zur Regelung eines Antriebsschlupfes ungeeignet. Hinzu käme, dass mangels einer Orientierungsangabe (+ oder -) in diesem Falle, wenn nicht weitere Vorkehrungen getroffen würden, nicht eine antreibende Längskraft sondern fälschlicherweise eine exorbitant hohe verzögernde Längskraft erkannt würde. - Ähnliche Probleme bestehen, wenn in der in Fahrtrichtung gesehen hinteren Radhälfte, zum Beispiel in der 270°-Stellung, die Torsionsdeformation für die Bestimmung der walkarbeitsabhängigen Größe erfasst werden soll.

Die Erfinder haben sich deshalb die weitere Aufgabe gestellt, vorbeschriebene Verfahren und Vorrichtungen dahingehend weiterzubilden, dass sie Torsionsdeformationen in beiden Drehsinnen genau durch Zeitspannenmessungen erkennen können.

Hierzu geben sie in den Ansprüchen 7 und 8 zwei alternative Lösungen an.

Die Lösung gemäß Anspruch 7 ist dadurch gekennzeichnet, dass sowohl die Zeitspanne zwischen dem Passieren der Marken 2 und 3 als auch zwischen dem Passieren der Marken 3 und 2 gemessen werden und von den beiden gemessenen Zeitspannen die eine ein positives und die andere ein negatives Vorzeichen erhält und von beiden die betragsmäßig kleinere Zeitspanne verwertet wird. Auf vorgenanntes Beispiel zurückkommend würde hiermit in dem zuvor problematischen Fall also nicht eine Torsionsdeformation von 359°, sondern eine von -1° ermittelt.

Die Vorzeichenvereinbarung kann auch umgekehrt sein, wichtig ist nur, dass einem Orientierungswechsel der zu messenden Größe ein Orientierungswechsel des Messergebnisses entspricht.

Der Vorteil dieser Verfahrensweiterbildung liegt darin, dass D-d zu Null gesetzt werden darf, insbesondere auch D=0 und d=0. Hiermit wird die absolut größtmögliche Messgenauigkeit erreicht. Ferner läßt sich das vorzeichenbehaftete Messergebnis besonders leicht interpretieren. Allerdings ist der Messaufwand grundsätzlich doppelt so hoch wie in der Verfahrensweiterbildung gemäß dem nachfolgend erläuterten Anspruch 8.

Die Verfahrensweiterbildung gemäß Anspruch 8 macht sich zu Nutze, dass selbst die maximal auftretenden Torsionswinkelbeträge, die verantwortlich sind für die detektierten Zeitspannenänderungen und in der Größenordnung von 1° liegen, klein sind im Verhältnis zum Vollwinkel. Kurz zusammengefasst wird ein ausreichend großer Offset durch entsprechende Marken- und Sensorplazierung eingestellt, beispielsweise 2°, sodass unter allen Umständen die gemessenen Zeitspannenänderungen frei sind von Vorzeichenwechseln, im genannten Beispiel zwischen 1° und 3° liegen; 1° könnte beispielsweise zur maximalen bremsenden Längskraft gehören, 1,5° zu einer üblichen bremsenden Längskraft, 2° zur Längskraftfreiheit, 2,5° zu einer üblichen Vortriebskraft und 3° zur maximal möglichen Vortriebskraft.

Weniger gerafft: Der Differenzwinkel (D) eines Markenpaares, bestehend aus einer inneren und einer äußeren Marke, ist definiert ist als der Winkel zwischen der Phasenebene der einen Marke und der Phasenebene der anderen Marke, wobei die Phasenebene einer Marke definiert ist als die die Radachse enthaltende Ebene, in der die jeweilige Marke auf dem Rade angeordnet ist. Der Differenzwinkel (d) eines Sensorpaares bestehend aus einem inneren und einem äußeren Sensor, ist definiert ist als der Winkel zwischen der Stellungsebene des einen Sensors und der Stellungsebene des anderen Sensors, wobei die Stellungsebene eines Sensors definiert ist als die die Radachse enthaltende Ebene, in der der jeweilige Sensor nicht-rotierend angeordnet ist.

Hiervon ausgehend ist diese Verfahrensweiterbildung dadurch gekennzeichnet, dass zur Vermeidung von Zeitspannen unterschiedlichen Vorzeichens der Differenzwinkel (D) des Markenpaares um mindestens soviel vom Differenzwinkel (d) des Sensorpaares abweicht wie der Verdrehwinkel zwischen äußerem und innerem Bereich unter maximaler Beanspruchung des Rades, sodass von dem bezeichneten Markenpaar nur eine bestimmte Marke, also entweder die innere oder die äußere, die Zeitspannenmessung auslöst und die andere Marke, also entweder die äußere beziehungsweise die innere, die Zeitspannenmessung stoppt. Vorzugsweise wird dabei gemäß Anspruch 9 oder 10 einer der beiden Differenzwinkel (entweder D oder d) zu Null gesetzt.

Prinzipiel ist es bereits ausreichend, ein einziges Markenpaar auf dem zu überwachenden Rade anzuordnen; sofern die Marken extra am Reifen bzw. am Rad angebracht werden müssen, hat dieses untere Extrem den Vorteil, dass der Aufwand minimal ist. Allerdings ist die Auflösung über der Zeit dabei relativ schlecht; deshalb empfiehlt sich eine solche Bemessung allenfalls für extrem hochtourig drehende Räder, beispielsweise die relativ kleinrädrigen Fahrwerke von Jagdflugzeugen mit Startgeschwindigkeiten von etwa 350 km/h.

Zu einer besseren Auflösung der ermittelten Längskräfte und/oder der Walkarbeit pro Umdrehung (also Reifeneinfederung oder Latschlänge oder Last-Druck-Verhältnis) kommt man mit einer Verfahrensweiterbildung gemäß Anspruch 11, dergemäß mehrere Markenpaare auf dem Rade angeordnet sind. Vorzugsweise sollte jedes Sensorpaar die dann pro Radumdrehung mehreren veränderlichen Zeitspannen zwischen dem Passieren der beiden Marken eines jeden Paares aus einer inneren und einer äußeren Marke messen.

Angesichts dessen, dass die zu messenden Winkelspannen vom einen Belastungsextremum zum anderen etwa 2° betragen, sollte zur einfachen Vermeidung von Verwechselungen (also dass nicht fälschlicherweise die Marke eines Paares als Marke eines benachbarten Paares fehlinterpretiert wird) für die Anzahl der Markenpaare als Obergrenze 180 eingehalten werden; noch empfehlenswerter ist es, wenn zwecks größerer Sicherheit vor Verwechselungen noch an beiden Enden jeweils 0,5° Sicherheitsabstand eingehalten wird, also 3° für jedes Markenpaar frei gehalten werden.

Die besonders empfohlene Obergrenze für die Bemessung der Anzahl der Markenpaare liegt deshalb bei 120.

Die Verarbeitung dieser Vielzahl von Messwerten wird vereinfacht, wenn gemäß Anspruch 17 jedes der Markenpaare den gleichen Differenzwinkel aufweist. (Zu diesem Zwecke können - müssen aber nicht - alle Marken gleichmäßig auf dem jeweiligen Umfang verteilt sein; bei ungleichförmiger Verteilung in einer der beiden Markenscharen muss die andere Markenschar gemäß Anspruch 13 oder 36 die gleiche Ungleichförmigkeit aufweisen, sodass die Phasenbeziehung innerhalb eines jeden Markenpaares gleich ist; beide Varianten sind Gegenstand des Vorrichtungsanspruches 35.) Allerdings ist dies keine notwendige Bedingung.

Wenn - etwa zur Kostendämpfung oder zur Zuverlässigkeitssteigerung - auf ein sperates Anbringen von Marken am Reifen im äußeren Bereich verzichtet werden soll, was sich für Großserien-Anwendungen empfiehlt, so könnten gemäß einer Weiterbildung der Lehre gemäß dem Vorrichtungsanspruch 31 in - vorzugsweise regelmäßigen - Umfangsabständen zumindest auf der Reifenseite I, die bezüglich des Fahrzeuges nach axial innen weist, einige Drahtenden einer Gürtellage verlängert sein und diese "herausragenden" Drahtenden könnten mit Sensoren, die gemäß Anspruch 30 auf eine Änderung der magnetischen Flussdichte ansprechen, zuverlässig detektiert werden.

Bei einer ungleichmäßigen Markenpaarverteilung gemäß Anspruch 13 oder 36 ergäbe sich der Vorteil, dass für jeden Messwert genau die zugehörige Drehstellung des Rades erkannt werden könnte. Dies würde zum Beispiel zusätzlich die genaue Detektion von Radunrundheiten oder Unwuchten ermöglichen. Außerdem erlaubt dies erhebliche Vereinfachungen in der Erstellung von verfahrensgeeigneten Vorrichtungen:

Die meisten Fahrzeugreifen verfügen über Querrillen in der Laufstreifenprofilierung. Der häufig als "Seitendecor" bezeichnete Randbereich der Laufstreifenprofilierung, der nicht im normalen Fahrbetrieb sondern nur beim schrägen Anfahren von Bordsteinkanten Bodenkontakt erfährt, weist häufig zur Verbesserung des Kantenklettervermögens ebenfalls Querrillen, also nicht in Umfangsrichtung verlaufenden Rillen, auf, die meistens - schon aus Gründen der stilistischen Konsequenz und des erwünschten breiteren Erscheinungsbildes der Reifen - in einer Flucht zu den Querrillen des Hauptbereiches der Lauffläche, der im normalen Fahrbetrieb Bodenkontakt erfährt, liegen. Infolgedessen liegen die Querrillen des Seitendecors meistens nicht in gleichmäßiger Teilung vor, sondern entsprechend der aus Geräuschgründen verwendeten Pitchfolge des Laufflächenhauptbereiches.

Insbesondere im Zusammenwirken mit Sensoren für die äußeren Marken, die optische Signale erkennen, zum Beispiel auf eine Änderung der Lichtreflexion vom beobachteten Gegenstand ansprechen, könnten gemäß Anspruch 32 die Querrillen des Seitendecors als äußere Marken benutzt werden; es wäre also kein zusätzliches, nicht einmal ein geändertes, Bauteil am Reifen erforderlich.

Natürlich wäre eine solche Vorgehensweise auch dann noch möglich, wenn nicht im Seitendecor, aber immerhin irgendwo im Laufflächenhauptbereich, eine - vorzugsweise optisch - sensierbare Querrillenfolge vorhanden wäre; allerdings ist dann die reifennahe Anbringung des oder der äußeren Sensoren wegen der größeren Länge des nachfolgend "äußerer Sensorträger" genannten Verbindungsteiles zwischen Achsschenkel und Sensor aufwendiger; überdies würde der Sensorträger schwerer und schwingungsanfälliger.

Wenn man gemäß den Ansprüchen 13 oder 36 so vorgehen will, dass trotz ungleichmäßiger Verteilung der Markenpaare innerhalb eines jeden Markenpaares der Differenzwinkel gleich ist, müssen beide Markenspuren (auch - scharen genannt) in der Weise aufeinander abgestimmt sein, dass die innere Markenspur genau die gleiche Ungleichförmigkeit wie die äußere Markenspur aufweist. Da es eine große Zahl verschiedener Pitchfolgen gibt sogar innerhalb der Reifentypen für ein bestimmtes Fahrzeug, ist es in solchem Falle sinnvoll, nicht nur die äußere Markenspur sondern auch die innere Markenspur am Reifen anzubringen - letztere vorzugsweise im Wulstbereich - weil so komplizierte, der Abstimmung dienende Kommunikation zwischen Fahrzeug- und Reifenhersteller vermieden wird.

Allerdings würde dies zu einer Verteuerung des Reifens führen; von daher ist es vorteilhaft, auch als innere Marken solche Radteile heranzuziehen, die ohnehin vorhanden sind. Vorhanden ist bei jedem gängigen Schlupfregelsystemen ein Polrad an jedem Rad mit einer Vielzahl - allerdings gleichmäßig verteilter - Pole. Unter Aufgabe der Differenzwinkelkonstanz aller Markenpaare, ist es möglich, als äußere Marken die (zumeist ungleichmäßig verteilten) Querrillen des Laufflächenprofiles, insbesondere des Seitendecors, zu nutzen und als innere Marken die (gleichmäßig verteilten) Pole eines ohnehin vorhandenen Polrades.

Allerdings muss hierzu die Auswerteeinheit über mehr Speicher- und Rechenkapazität verfügen und gemäß den Ansprüchen 33 und 37 - zum Beispiel durch statistische Rechenprogramme oder durch Vergleich mit den Daten eines herkömmlichen Schlupfregelsystems - zunächst die Markenverteilung ermitteln, oder aber eingegeben bekommen.

Eine extrem hohe Anzahl von Markenpaaren und die damit ermöglichte über dem Rollweg des Fahrzeuges extrem feine Auflösung der Messung der Längskraft und/oder der walkarbeitsabhängigen Größe führt angesichts unvermeidlicher Trägheiten in der Brems- und/oder Antriebsmomentenverstellung nur noch bei geringen Geschwindigkeiten oder sehr großen Raddurchmessern zu einem genaueren Schlupfregelverhalten; andererseits interessieren Geschwindigkeiten unterhalb von 20 km/h kaum, weil die Bremswege aus diesen Geschwindigkeiten ohnehin kurz sind, selbst ohne Verwendung von Schlupfregelsystemen. Deshalb ergibt sich keine nennenswerte Verbesserung mehr, wenn bei PKW die Anzahl der Markenpaare über 40 und bei LKW über 80 hinaus gesteigert wird. Von daher ist es sinnvoll, zur Vermeidung überflüssiger Kosten die Anzahl der inneren Marken, die zumindest in den meisten Fällen einer seperaten Anbringung am Rad bedürfen, auf diese Größenordnung zu begrenzen. Besonders dann, wenn die erfindungsgemäßen Verfahren und Vorrichtungen nicht alternativ sondern ergänzend zu den herkömmlichen Schlupfregelsystemen eingesetzt werden, was besonders günstig ist, können als innere Marken die üblicherweise zahnartig ausgebildeten Pole des bislang üblichen Polrades herangezogen werden. Die dort übliche Polanzahl liegt in der gleichen Größenordnung, wie oben beschrieben; die den Erfindern bekannten sind 24 und 96.

Die übliche Anzahl von detektierbaren Reifenquerrillen an PKW liegt zwischen 61 und 79. Angenommen ein PKW habe ein Polrad mit 44 Polen und der montierte Reifen habe 67 Querrillen, so ist es dennoch möglich, die Reifenquerrillen als äußere Marken heranzuziehen, wenn die Auswerteeinheit der Schlupfregelvorrichtung gemäß Anspruch 34 ein Auswahlprogramm enthält, welches die zur Markenpaarbildung am besten geeigneten Marken auswählt. Dabei geht es insbesondere um das Aussscheiden von äußeren Marken, also eine Verkleinerung derjenigen Markenmenge, die zu groß ist. Es gibt aber auch Ausnahmefälle, in denen es zweckmäßig ist, auch einige wenige Marken aus der kleineren Menge auszuscheiden; beispielsweise könnten 25 äußere und 2 innere Marken aus der Auswertung ausgeschieden werden. Solche Ausnahmefälle sind dann wahrscheinlicher, wenn auch die Polverteilung auf dem Polrad ungleichmäßig ist, was aber wohl bislang nicht gemacht wird.

LKW-Reifenprofile sind in der Regel gröber; typische Querrillenanzahlen liegen - trotz größerer Raddurchmesser - in der Größenordnung zwischen 35 und 60, meistens bei etwa 45. Es gibt Schlupfregelsysteme für LKW mit Polrädern größerer Polanzahl; in solchen Fällen sind umgekehrt zum vorher diskutierten Falle insbesondere innere Marken auszuscheiden.

Jegliches Aussscheiden, egal ob innerer oder äußerer Marken, erfolgt zweckmäßigerweise so, dass Markenpaare gemäß Anspruch 8 gebildet werden, sodass in allen Belastungsfällen Zeitspannen frei von Vorzeichenwechseln gemessen werden.

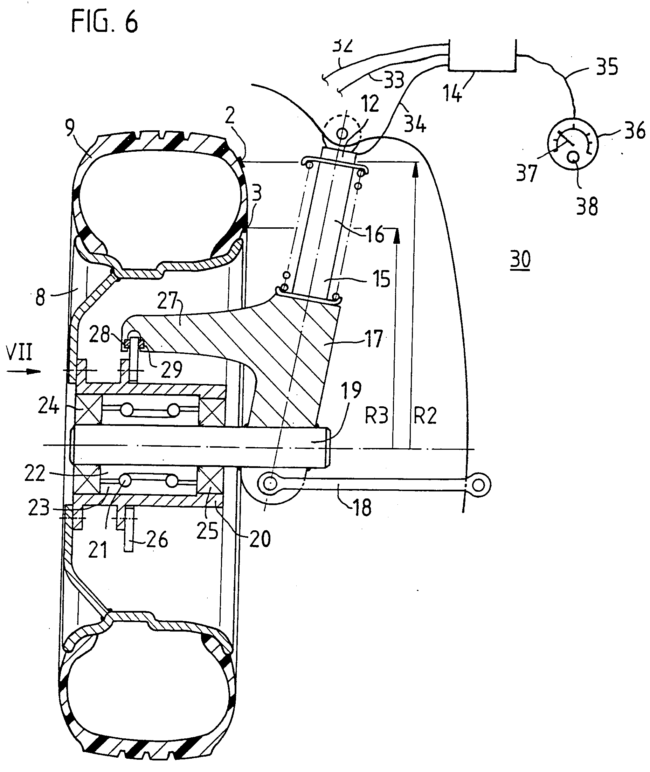

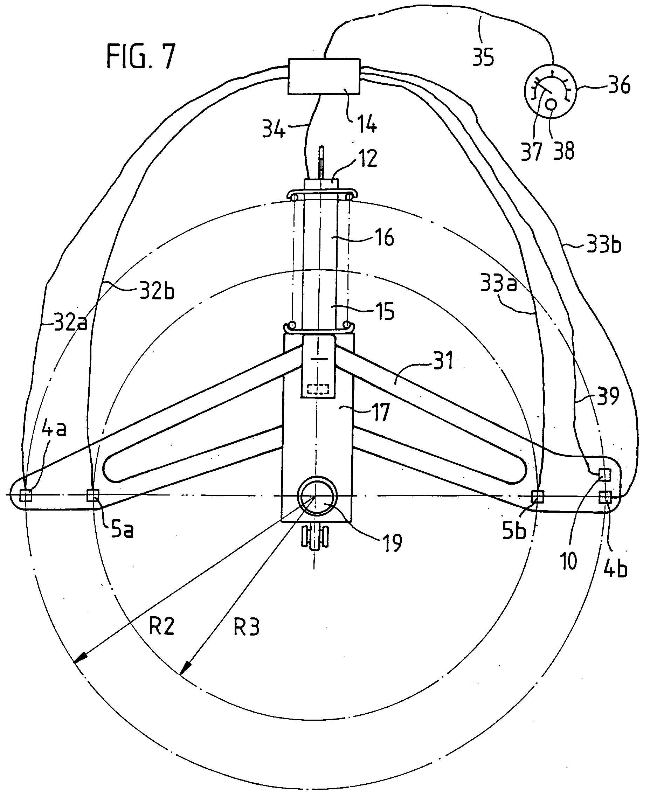

Um sowohl die Längskraft als auch die walkarbeitsabhängige Größe bestimmen zu können, werden vorzugsweise gemäß den Ansprüchen 14 und 39 mehrere Sensorpaare nicht-rotierend in Radnähe in verschiedenen Stellungsebenen angeordnet. Dann bewirkt jedes diese verschiedenen Sensorpaare passierende Markenpaar daselbst eine Zeitspannenmessung vom Passieren der voreilenden Marke dieses Paares bis zum Passieren der nacheilenden Marke dieses Paares. Dabei ist gemäß Anspruch 15 die Stellungskombination 90°/270° bei Verwendung zweier Sensorpaare bevorzugt wegen der größten Signalbeträge in der Messung der walkarbeitsabhängigen Größe und wegen einfacher und damit sowohl flinker als auch kostengünstiger Datenverarbeitung in der Auswerteeinheit. Ferner erlaubt diese Stellungskombination gemäß Anspruch 16 auch eine genaue und datentechnisch simple (nur eine Addition ist erforderlich!) Bestimmung der Längskraft. Gemäß Anspruch 17 sollten beide Messmöglichkeiten ausgenutzt werden. Entsprechend sind die besonders bevorzugten Vorrichtungen durch eine Anordnung aller vier Sensoren auf einem achsschenkelfesten Sensorträger auf einer gemeinsamen fahrzeugwaagerechten Geraden gekennzeichnet. Die zusammengehörenden Figuren 6 und 7 zeigen eine solche Ausführung.

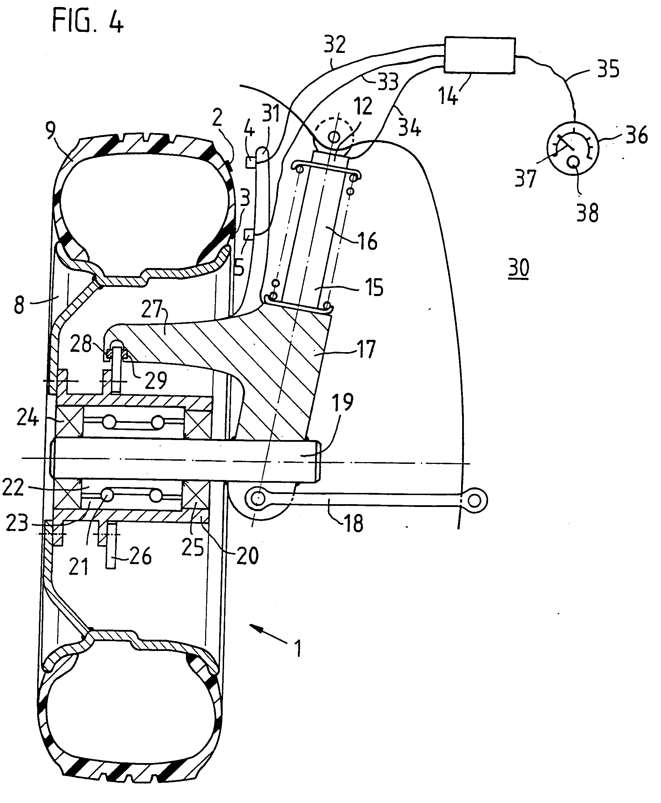

Mit besonders geringer Fehlerwahrscheinlichkeit und besonders geringem Aufwand läßt sich gemäß Anspruch 18 die Längskraft bestimmen bei einer Anordnung eines einzigen Sensorpaares in der 0°-Stellung, also auf einer Fahrzeugsenkrechten durch die Rotationsachse. Eine besonders hohe Genauigkeit wird erreicht durch Anordnung beider Sensoren auf einem achsschenkelfesten, sich nach oben erstreckenden Sensorträger; eine solche Vorrichtung zeigt Figur 4.

Vorzugsweise ist gemäß Anspruch 43 - etwa in der 90°- oder in der 270°-Stellung - ein achsschenkelfester, auf die äußeren Marken reagierender weiterer Sensor (10) angeordnet, der den Axialabstand zwischen ihm und jeder ihn passierenden Marke erfasst. So wird auch eine Messung der Reifenquerkraft ermöglicht und zwar besonders genau, wenn gemäß Anspruch 26 ein weiterer abstandsmessender Sensor in der 0°-Stellung angeordnet ist. Eine Querkraftmessung ist bedeutungsvoll, wenn eine Vollbremsung nicht auf gerader Strecke, sondern in einer Kurve erfolgen soll:

Auf gerader Strecke sollte in einer solchen Notsituation der maximal mögliche Reibungsbeiwert zur Verzögerung eingesetzt werden; dabei wird aber unvermeidlicherweise die Fähigkeit, Querkräfte zu übertragen, sehr klein. Wenn die Vorrichtung aber, wie bevorzugt, durch Querkraftmessung an jedem Rade einen erhöhten Bedarf an Querkraftübertragungsfähigkeit erkennen kann, vermag sie den eingeregelten Schlupf - freilich eine etwas verringerte Längskraftübertragung hinnehmend - so weit zu reduzieren, dass dieser Bedarf befriedigt wird, das Fahrzeug also lenkbar bleibt. Wenngleich eine erhöhte Abbremsfähigkeit vor einem plötzlich auftauchenden Hindernis bereits wesentlich die aktive Fahrzeugsicherheit erhöht, eine sichergestellte Ausweichfähigkeit erhöht sie in den überwiegenden Fallkonstallationen noch mehr. Taucht das Hindernis jedoch auf einer Geraden auf, so wurde die Aufrechterhaltung voller Lenkfähigkeit die Hinnahme einer unnötigen Bremswegverlängerung bedeuten. - Natürlich könnte die Querkraft aber auch an einem Querlenker oder einem anderen gleichwirkenden Bauteil, etwa einer längs liegenden Blattfeder eines LKW, gemessen werden.

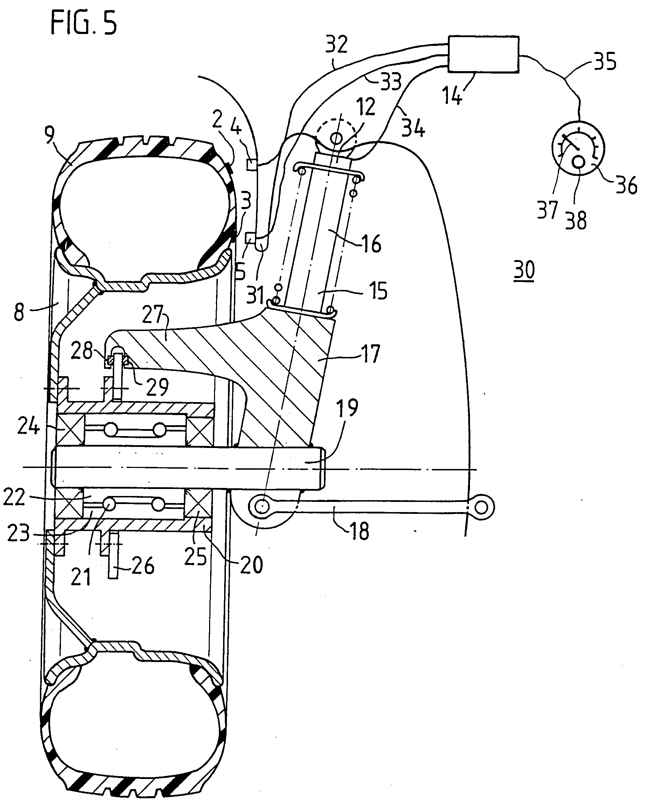

Zur Verringerung der ungefederten Massen ist es im Unterschied zu der in Figur 4 gezeigten Vorrichtung - zumindest solange keine großen Radeinschlagwinkel auftreten - auch möglich, den Sensorträger karosserieseitig anzubinden; eine solche Vorrichtung zeigt Figur 5.

Sind, wie dort gezeigt, beide Sensoren auf einem karosseriefesten Sensorträger angeordnet, so muss - damit Verwechselungen ausgeschlossen sind, also beispielsweise nicht bei starker Einfederung der äußere Sensor das Passieren einer inneren Marke erfasst - entweder die weitere Voraussetzung eingehalten werden,

dass der radiale Abstand zwischen den Sensoren und zwischen beiden Markenspuren größer ist als der Federweg der Radaufhängung, oder

dass das Passieren der Marken der einen Spuren durch einen anderen physikalischen Effekt erkannt wird als das Passieren der Marken der anderen Spur; beispielsweise könnten die äußeren Marken optisch und die inneren Marken elektromagnetisch erfasst werden.

Weiterhin wäre es auch möglich, nur den äußeren Sensor karosserieseitig zu befestigen und den inneren Sensor achsschenkelseitig, vorzugsweise an der Mantelfläche des Achsschenkels selbst und demgemäß die Marken der inneren Spur in der Radnabe. Die zusammenwirkenden inneren Marken und der entsprechende Sensor tragen nämlich so kaum zur ungefederten Masse bei und Verwechselungen zwischen inneren und äußeren Marken sind selbst bei Verwendung des gleichen Erkunnungseffektes ausgeschlossen.

Allerdings kann mit jeglicher Anordnung eines einzigen Sensorpaares keine walkarbeitsabhängige Größe bestimmt werden; hierzu sind immer mindestens zwei Sensorpaare erforderlich. Anspruch 19 lehrt deshalb wiederum eine Kombination aus zwei verschiedenen Messstellungen für Sensorpaare und zwar die soeben behandelte 0°-Stellung und zumindest eine der zuvor behandelten Stellungen 90° oder 270°. All diese bevorzugten Stellungskombinationen sowie auch die Kombination aller drei Vorzugsstellungen sind Gegenstand des Anspruches 40.

Die Verfahrensvariante gemäß Anspruch 19 nimmt hin, dass sowohl zur Bestimmung der walkarbeitsproportionalen Größe als auch der Längskraft nur die Hälfte der Zeitspannendifferenz, wie sie in der 90°/270°-Stellungskombination auftritt, zur Verfügung steht und deshalb die Messgenauigkeit etwas geringer ist. Sie hat aber den Vorzug, dass selbst bei einer Störung des Sensorpaares in der 90° oder 270°-Stellung die für die Schlupfregelung besonders wichtige Längskraft immer noch einwandfrei bestimmt wird; nur die Bestimmung der walkarbeitsproportionalen Größe gelingt nicht mehr. Von daher ist - wenn man sich auf die Verwendung zweier Sensorpaare beschränkt - die Ausfallwahrscheinlichkeit der Längskraftbestimmung mit einer Stellungskombination, zu der die 0°-Stellung gehört, kleinstmöglich. Bei der 90°/270°-Stellungskombination hingegen würde der Ausfall eines jeglichen der vier Sensoren nicht nur die Bestimmung der walkarbeitsproportionalen Größe vereiteln sondern auch der Längskraft.

Eine besonders günstige Kombination aus Zuverlässigkeit und Genauigkeit wird deshalb erreicht, wenn die Vorrichtung drei Sensorpaare umfasst und zwar je eines in der 0°, der 90° und der 270°-Stellung. Eine solche Vorrichtung sollte so verfahren, dass im normalen Betriebszustande die Größe(n), wie sie aus der 90°- und der 270°-Stellung bestimmt werden, verwertet, insbesondere angezeigt und/oder zur Regelung der Brems- bzw. Antriebsmomente verwendet werden, als Kontrolle aber die Größen auch aus der enthaltenen Stellungskombination 0°/90° und 0°/270° bestimmt und mit erstgenannten verglichen werden. Wird ein kleiner Schwellwert überschritten, sollte eine Fehlermeldung erfolgen. Ferner sollte die Auswerteeinheit unplausibele Daten erkennen und von der weiteren Verwendung ausschließen. Eine solche vorteilhafte Vorrichtung kann notfalls den Ausfall eines beliebigen Sensors verkraften.

Gemäß Anspruch 23 sollte die walkarbeitsproportionale Größe - egal, ob sie nun Reifeneinfederung oder Latschlänge oder Last-Druck-Verhältnis getauft ist - bestimmt werden und ab Überschreiten eines jeweiligen Grenzwertes sollte eine Warnung vor zu geringem Luftdruck an den Fahrer abgegeben werden und/oder die erreichbare Höchstgeschwindigkeit - ggf. außentemperatur- und/oder reifentypabhängig - so weit abgesenkt werden, dass ein Reifenausfall durch übergroße Walkbeanspruchung ausgeschlossen ist. Weil die Bestimmung der walkarbeitsproportionalen Größe mittels der Torsionsdeformationsbestimmung mittels Messung der Zeitspannenänderung an Sensoren vorbei passierender Marken kostengünstig, zuverlässig und erstaunlich genau ist, ermöglicht diese Lösung der zweiten Aufgabe einen beträchtlichen Sicherheitsgewinn bei gut vertretbaren Zusatzkosten. Das Kosten/Nutzen-VerhältniS ist deutlich günstiger als bei den vorbekannten Lösungsversuchen via Luftdruckmessung im rotierenden Reifen mit den leidigen Datenübertragungsproblemen.

Wie bereits früher erläutert, ist die walkarbeitsproportionale Größe, zum Beispiel die Reifeneinfederung, auch proportional zum Verhältnis zwischen der Radlast und dem Luftdruck. Wird eine der beiden Größen Radlast (siehe Anspruch 21) oder Luftdruck (siehe Anspruch 20) seperat bestimmt, so läßt sich auch die andere Größe ohne weitere Messung bestimmen durch eine simple Rechnung, nämlich

$$\text{Radlast} = \text{Last-Druck-Verhältnis} \times \text{Luftdruck (Anspruch 20)}$$

bzw.

$$\text{Luftdruck} = \text{Radlast} / \text{Last-Druck-Verhältnis (Anspruch 21)}$$

mit einem kalibrierten Proportionalitätsfaktor.

Die seperate Größe Luftdruck ist allerdings nicht von unmittelbarem Sicherheitsinteresse; deshalb wird er vorzugsweise gemäß Anspruch 42 nicht gemessen. Er ist aber immerhin eine gute Service-Anweisung. Aus diesem Grunde, aber auch weil die Radlast an einem nicht-rotierenden Teil, zum Beispiel dem Federbein, bestimmt werden kann, ist von diesen beiden Varianten die nach Anspruch 21 bevorzugt. Die - vorzugsweise radindividuelle - Radlastbestimmung erlaubt eine besonders genaue Bestimmung des anliegenden $\mu$ im Zusammenhang mit einer erfindungsgemäßen Längskraftbestimmung und dadurch eine besonders feine Regelung des Brems- bzw. Antriebsmomentes.

Wird der Reifenluftdruck in an sich bekannter Weise gemessen, so sollte gemäß Anspruch 24 ab Überschreiten eines Grenzwertes für die aus obiger Gleichung bestimmte Radlast eine Warnung vor - vorzugsweise - zu hoher Radlast oder vor zu geringem Luftdruck an den Fahrer abgegeben werden und/oder die erreichbare Höchstgeschwindigkeit - ggf. außentemperatur- und/oder reifentypabhängig - so weit abgesenkt werden, dass ein Reifenausfall durch übergroße Walkbeanspruchung ausgeschlossen ist und/oder das Starten des Fahrzeuges überhaupt verhindert wird. Wird hingegen die Radlast in an sich bekannter Weise gemessen, so sollte gemäß Anspruch 25 ab Unterschreiten eines Grenzwertes für den aus obiger Gleichung bestimmten Reifenluftdruck eine Warnung vor zu geringem Luftdruck an den Fahrer abgegeben werden und/oder die mögliche Höchstgeschwindigkeit - ggf. außentemperatur- und/oder reifentypabhängig - so weit abgesenkt werden, dass ein Reifenausfall durch übergroße Walkbeanspruchung ausgeschlossen ist.

Eine erfindungsgemäße Vorrichtung mit Zeitspannenmessung zur Erkennung der Torsionsdeformation benötigt an jedem überwachten Rade zwei Spuren von gegeneinander tordierbaren Marken. Die radial innere davon kann, muss aber nicht, am Reifen angeordnet sein. Wenn sie am Reifen angeordnet ist, sollte sie so weit wie möglich radial innen angeordnet sein. Jede Markenspur muss mindestens eine, vorzugsweise eine Vielzahl von Marken enthalten. Gemäß Anspruch 44 muss der Reifen mindestens die äußere Markenspur enthalten, vorzugsweise in seinem radial äußeren Bereich, damit die durch Zeitspannenänderung detektierten Torsionswege möglichst groß sind und damit auch die Zeitspannungsänderungen selbst.

Die Anordnung der inneren Marken gemäß Anspruch 45 im radial inneren Bereich des Reifens hat logistische Vorteile. Insbesondere kann so leicht und zuverlässig sichergestellt werden, dass die innere Markenspur der gleichen Pitchfolge entspricht wie die äußere, was insbesondere dann hilfreich ist, wenn das Seitendecor optisch abgetastet wird, weil so gemäß Anspruch 47 die Konstanz der Markendifferenzwinkel gegeben ist. Die Marken können sich gemäß Anspruch 50 durch ein Erhabensein oder Versenktsein beim Passieren von entsprechenden Sensoren bemerkbar machen; dies gilt auch, wenn Änderungen von Schalllaufwegen zur Detektion eingesetzt werden.

Die Erfindung wird nachfolgend anhand einiger Figuren näher erläutert. Es zeigt:

Fig. 4 einen Schnitt durch eine erfindungsgemäße McPherson-Radaufhängung mit achsschenkelfest angeordneten Sensoren in der 0°-Stellung,

Fig. 5 einen Schnitt durch eine erfindungsgemäße McPherson-Radaufhängung mit karrosseriefest angeordneten Sensoren in der 0°-Stellung,

Fig. 6+7 einen Schnitt durch eine erfindungsgemäße McPherson-Radaufhängung mit achsschenkelfest angeordneten Sensoren in der 90°- und 270°-Stellung,

Fig. 8+8a einen Schnitt durch eine erfindungsgemäße McPherson-Radaufhängung mit zumindest einem achsschenkelfest angeordneten inneren Sensor in der 0°-Stellung angeordnet direkt auf dem Achsschenkel und einem äußeren Sensor entsprechend Fig. 5,

Fig. 9 einen erfindungsgemäßen Reifen mit einem Seitendecor, dessen Querrillen als äußere Marken verwendet werden und

Fig. 10 einen erfindungsgemäßen Reifen mit einer fahrzeuginneren Gürtelkante mit einzelnen, durch Verlängerung sich von ihrer Umgebung unterscheidenden und dadurch detektierbaren Drahtenden.

EP 0 783 419 B1

Figur 4 zeigt einen Schnitt durch eine erfindungsgemäße McPherson-Radaufängung mit einem Rad 1, einer Feder 15, einem Kolben 16 und einer Zylindereinheit 17. Der Kolben 16 ist an seinem oberen Ende mit der Karosserie 30 gelenkig verbunden.

Der Achschenkel 19 ist an seinem fahrzeuginneren Ende fest mit der Zylindereinheit 17 verbunden. Dort greift ein Querlenker 18 an, der mit der Karosserie 30 gelenkig verbunden ist. Der Achsschenkel 19 trägt mittels eines Radlagers 21 eine Radnabe 20. Das Radlager 21 besteht aus einem Innenring 22 und einem Außenring 23 und ist rechts und links mit je einem Dichtring 24, 25 abgedichtet.

An der Radnabe 20 ist die Felge 8 montiert. Sie trägt außen einen Luftreifen 9. Außerdem ist an der Nabe 20 eine Bremsscheibe 26 montiert.

Eine Bremszange 27 mit Bremsbelägen 28, 29 greift um die Bremsscheibe 26 herum. Sie (27) ist mit der Zylindereinheit 17 fest verbunden.

An der Innenseite I des Reifens 9 ist eine äußere Marke 2 und eine innere Marke 3 gezeigt.

Der mit der Bremszange 26 fest verbundene und somit achsschenkelfeste Sensorträger 31 enthält einen äußeren Sensor 4 und einen inneren Sensor 5.

Passiert die äußere Marke 2 den äußeren Sensor 4, der über einen Draht 32 mit der Auswerteeinheit 14 verbunden ist, wird dort eine - vorzugsweise elektronische, quarzgesteuerte - Stoppuhr gestartet. Wenn die innere Marke 3 den inneren Sensor 5, der über einen Draht 33 mit der Auswerteeinheit 14 ebenfalls verbunden ist, passiert, wird die besagte Stoppuhr angehalten und die Zeitspanne t 2,3 gemessen.

Ebenfalls über einen Draht 34 ist die Kraftmessdose 12 am oberen Ende des Kolbens 16 mit der Auswerteeinheit 14 verbunden zur Bestimmung der Radlast.

Die Ergebnisse der Auswerteeinheit 14 werden über einen Draht 35 zur Anzeigeeinheit 36 weitergeleitet. Sie (36) ist vorzugsweise im Fahrzeuginneren angeordnet und besteht aus einer Luftdruckanzeige 37 und einem ABS-Kontrollämpchen 38.

Figur 5 zeigt einen Schnitt durch eine erfindungsgemäße McPherson-Radaufängung mit einer Feder 15, einem Kolben 16 und einer Zylindereinheit 17. Der Kolben 16 ist an seinem oberen Ende mit der Karosserie 30 gelenkig verbunden.

Der Achschenkel 19 ist an seinem fahrzeuginneren Ende fest mit der Zylindereinheit 17 verbunden. Dort greift ein Querlenker 18 an, der mit der Karosserie 30 gelenkig verbunden ist. Der Achsschenkel 19 trägt mittels eines Radlagers 21 eine Radnabe 20. Das Radlager 21 besteht aus einem Innenring 22 und einem Außenring 23 und ist rechts und links mit je einem Dichtring 24, 25 abgedichtet.

An der Radnabe 20 ist die Felge 8 montiert. Sie trägt außen einen Luftreifen 9. Außerdem ist an der Nabe 20 eine Bremsscheibe 26 montiert.

Eine Bremszange 27 mit Bremsbelägen 28, 29 greift um die Bremsscheibe 26 herum. Sie (27) ist mit der Zylindereinheit 17 fest verbunden.

An der Innenseite I des Reifens 9 ist eine äußere Marke 2 und eine innere Marke 3 gezeigt. Der mit der Karosserie 30 fest verbundene und somit

karosseriefeste Sensorträger 31 enthält einen äußeren Sensor 4 und einen inneren Sensor 5 deren radialer Abstand größer ist als der Einfederweg.

Passiert die äußere Marke 2 den äußeren Sensor 4, der über einen Draht 32 mit der Auswerteeinheit 14 verbunden ist, wird dort eine - vorzugsweise elektronische, quarzgesteuerte - Stoppuhr gestartet. Wenn die innere Marke 3 den inneren Sensor 5, der über einen Draht 33 mit der Auswerteeinheit 14 ebenfalls verbunden ist, passiert, wird die besagte Stoppuhr angehalten und die Zeitspanne t 2,3 gemessen.

Ebenfalls über einen Draht 34 ist die Kraftmessdose 12 am oberen Ende des Kolbens 16 mit der Auswerteeinheit 14 verbunden zur Bestimmung der Radlast.

Analog zur Figur 4 werden die Ergebnisse der Auswerteeinheit 14 über einen Draht 35 zur Anzeigeeinheit 36 weitergeleitet. Sie (36) ist vorzugsweise im Fahrzeuginneren angeordnet und besteht aus einer Luftdruckanzeige 37 und einem ABS-Kontrollämpchen 38.

Figur 6 zeigt einen Schnitt durch eine erfindungsgemäße McPherson-Radaufängung mit einer Feder 15, einem Kolben 16 und einer Zylindereinheit 17. Der Kolben 16 ist an seinem oberen Ende mit der Karosserie 30 gelenkig verbunden.

Der Achschenkel 19 ist an seinem fahrzeuginneren Ende fest mit der Zylindereinheit 17 verbunden. Dort greift ein Querlenker 18 an, der mit der Karosserie 30 gelenkig verbunden ist. Der Achsschenkel 19 trägt mittels eines Radlagers 21 eine Radnabe 20. Das Radlager 21 besteht aus einem Innenring 22 und einem Außenring 23 und ist rechts und links mit je einem Dichtring 24, 25 abgedichtet.

An der Radnabe 20 ist die Felge 8 montiert. Sie trägt außen einen Luftreifen 9. Außerdem ist an der Nabe 20 eine Bremsscheibe 26 montiert.

Eine Bremszange 27 mit Bremsbelägen 28, 29 greift um die Bremsscheibe 26 herum. Sie (27) ist mit der Zylindereinheit 17 fest verbunden.

An der Innenseite I des Reifens 9 ist eine äußere Marke 2 und eine innere Marke 3 gezeigt.

Die äußere Marke 2 beschreibt den Radius R2 und die innere Marke 3 beschreibt den Radius R3.

Passiert die äußere Marke 2 den hier nicht dargestellten äußerenäußeren Sensor 4, der über einen Draht 32 mit der Auswerteeinheit 14 verbunden ist, wird dort eine - vorzugsweise elektronische, quarzgesteuerte -Stoppuhr gestartet. Wenn die innere Marke 3 den hier nicht dargestellten inneren Sensor 5, der über einen Draht 33 mit der Auswerteeinheit 14 ebenfalls verbunden ist, passiert, wird die besagte Stoppuhr angehalten und die Zeitspanne t 2,3 gemessen.

Ebenfalls über einen Draht 34 ist die Kraftmessdose 12 am oberen Ende des Kolbens 16 mit der Auswerteeinheit 14 verbunden zur Bestimmung der Radlast.

Figur 7 zeigt eine Ansicht der Figur 6 von links zur Darstellung der Anordnung der Sensoren 4a, 4b, 5a, 5b und 10.

Sie zeigt die Feder 15 mit Kolben 16 und Zylindereinheit 17 mit der (17) der Sensorträger 31 fest und somit wieder achsschenkelfest verbunden ist.

Der Sensorträger 31 trägt je zwei äußere Sensoren 4a und 4b, je zwei innere Sensoren 5a und 5b und einen Sensor 10, der zur Messung der Axialabstände dient..

Um den Mittelpunkt des Achsschenkels 19 ziehen sich der innere Radius R3, auf dem die Sensoren 5a und 5b angeordnet sind, und der äußere Radius R2, auf dem die Sensoren 4a, 4b und 10 angeordnet sind.

Der Sensoren 4a, 4b, 5a , 5b und 10 sind über je einen Draht 32a, 32b, 33a , 33b und 39 mit der Auswerteeinheit 14 verbunden.

Ebenfalls über einen Draht 34 ist die Kraftmessdose 12 am oberen Ende des Kolbens 16 mit der Auswerteeinheit 14 verbunden zur Bestimmung der Radlast.

Analog zur den Figuren 4 bis 6 werden die Ergebnisse der Auswerteeinheit 14 über einen Draht 35 zur Anzeigeeinheit 36 weitergeleitet.

Sie (36) ist vorzugsweise im Fahrzeuginneren angeordnet und besteht aus einer Luftdruckanzeige 37 und einem ABS-Kontrollämpchen 38.

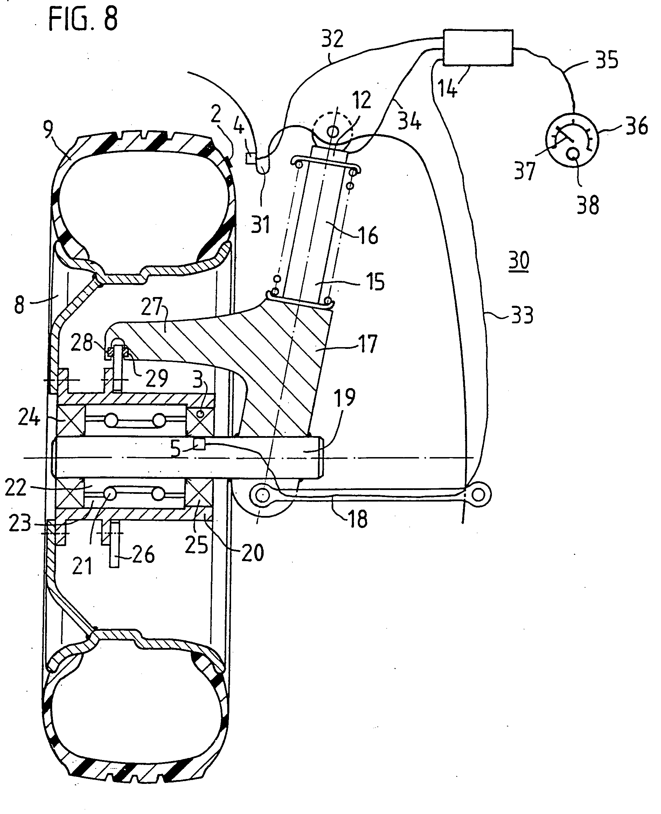

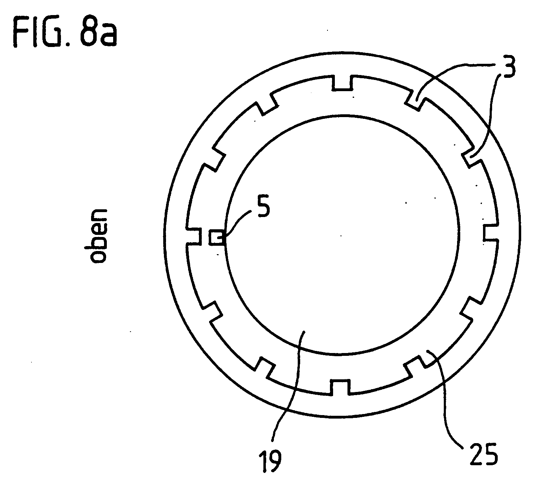

Figur 8 zeigt einen Schnitt durch eine erfindungsgemäße McPherson-Radaufängung mit einer Feder 15, einem Kolben 16 und einer Zylindereinheit 17. Der Kolben 16 ist an seinem oberen Ende mit der Karosserie 30 gelenkig verbunden.

Der Achschenkel 19 ist an seinem fahrzeuginneren Ende fest mit der Zylindereinheit 17 verbunden. Dort greift ein Querlenker 18 an, der mit der Karosserie 30 gelenkig verbunden ist. Der Achsschenkel 19 trägt mittels eines Radlagers 21 eine Radnabe 20. Das Radlager 21 besteht aus einem Innenring 22 und einem Außenring 23 und ist rechts und links mit je einem Dichtring 24, 25 abgedichtet.

An der Radnabe 20 ist die Felge 8 montiert. Sie trägt außen einen Luftreifen 9. Außerdem ist an der Nabe 20 eine Bremsscheibe 26 montiert.

Eine Bremszange 27 mit Bremsbelägen 28, 29 greift um die Bremsscheibe 26 herum. Sie (27) ist mit der Zylindereinheit 17 fest verbunden.

An der Innenseite I des Reifens 9 ist eine äußere Marke 2 gezeigt. Bevorzugt, wie auch in allen vorangehenden Figuren, verfügt der Reifen natürlich zwecks besserer Auflösung über eine Vielzahl von Marken, die aber in dieser Darstellungsart nicht sichtbar werden.

Ferner ist eine innere Marke 3 am Dichtring 25 befestigt zu sehen; natürlich gibt es vorzugsweise auch hiervon eine Vielzahl wie auch in den Ausführungsbeispielen zuvor. Weiter bevorzugt stimmt die Anzahl der inneren Marken mit der der äußeren Marken überein. Die Vielzahl von inneren Marken wird in der später erläuterten Figur 8a sichtbar.

Der mit der Karosserie 30 fest verbundene und somit karosseriefeste Sensorträger 31 enthält einen äußeren Sensor 4. Der innere Sensor 5 ist auf dem Achsschenkel 19 befestigt.

Passiert die äußere Marke 2 den äußeren Sensor 4, der über einen Draht 32 mit der Auswerteeinheit 14 verbunden ist, wird dort eine - vorzugsweise elektronische, quarzgesteuerte - Stoppuhr gestartet. Wenn die innere Marke 3 den inneren Sensor 5, der über einen Draht 33 mit der Auswerteeinheit 14 ebenfalls verbunden ist, passiert, wird die besagte Stoppuhr angehalten und die Zeitspanne t 2,3 gemessen.

Ebenfalls über einen Draht 34 ist die Kraftmessdose 12 am oberen Ende des Kolbens 16 mit der Auswerteeinheit 14 verbunden zur Bestimmung der Radlast.

Analog zu den Figuren 4 bis 7 werden die Ergebnisse der Auswerteeinheit 14 über einen Draht 35 zur Anzeigeeinheit 36 weitergeleitet. Sie (36) ist vorzugsweise im Fahrzeuginneren angeordnet und besteht aus einer Luftdruckanzeige 37 und einem ABS-Kontrollämpchen 38.

Figur 8a zeigt den Dichtring von der Fahrzeuginnenseite in Ansicht. Der Dichtring enthält einen innengezahnten Blechring, dessen zahnartige Vorsprünge nach radial innen als innere Marken 3 benutzt werden. Diese werden von - in diesem Beispiel nur einen - inneren Sensor(en) 5 detektiert, die direkt auf dem Achsschenkel 19 drehfest angeordnet sind. Der die Marken darstellende Blechring ist vorzugsweise, wie hier dargestellt, an den Dichtring 25 unverlierbar anvulkanisiert.

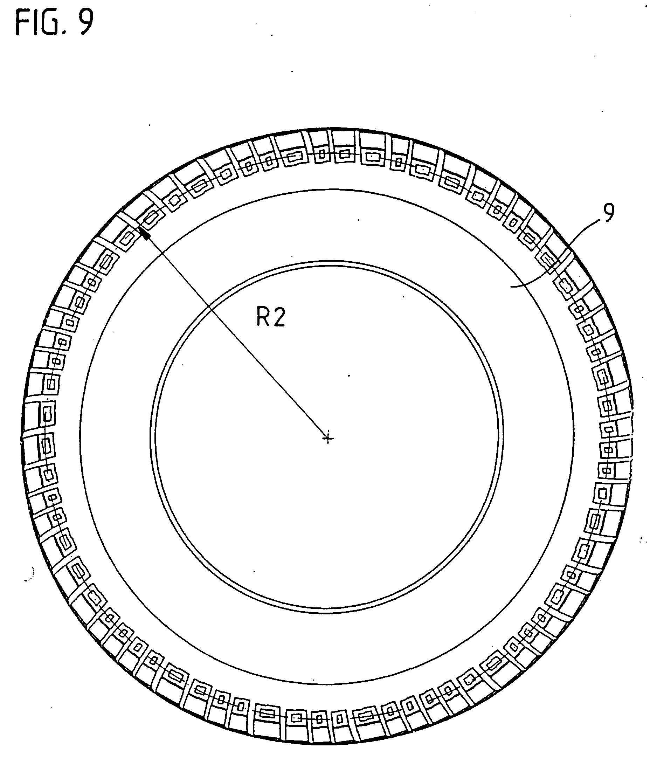

Figur 9 zeigt einen erfindungsgemäßen Reifen 9 in Seitenansicht. Der Kreisbogen R2 beschreibt die Lage der Marken, die auf dem Seitendecor verteilt angeordnet sind.

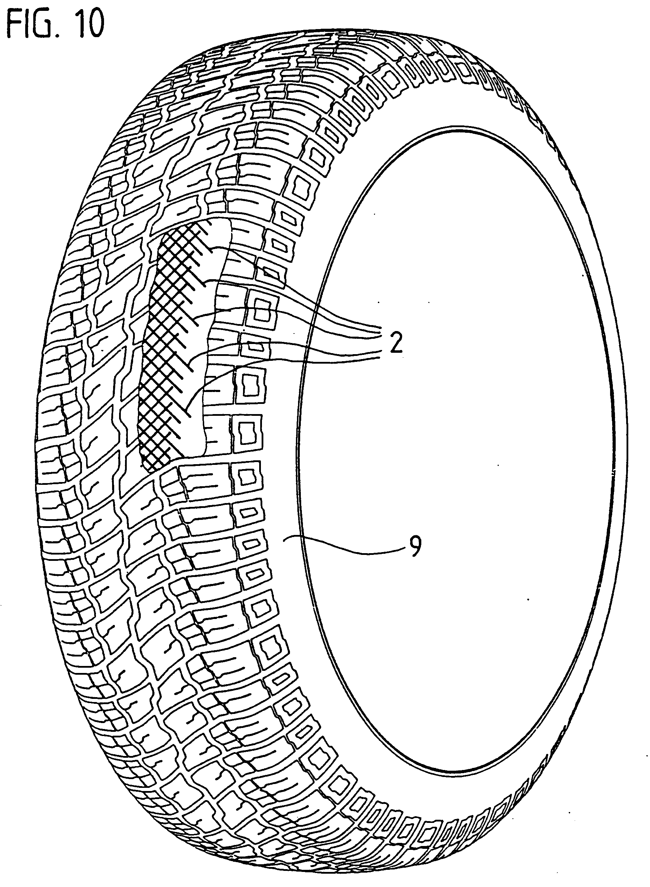

Figur 10 zeigt eine perspektivische Ansicht eines erfindungsgemäßen Reifens 9 mit freigelegten Gürtelkanten. Die Marken 2 sind hier als in regelmäßiger Abfolge verlängerte Drahtenden der unteren Gürtellage dargestellt. Die verlängerten Enden sollten nicht aus dem Gummi hervorstehen, wie hier gezeigt.

Eine Bezugszeichenliste ist Bestandteil der Beschreibung:

### Bezugszeichenliste

| | |
|---|---|
| 1 | Rad |
| 2 | äußere Marke |
| 3 | innere Marke |
| 4 | äußerer Sensor |
| 5 | innerer Sensor |
| 8 | Felge |
| 9 | Reifen |
| 12 | Kraftmessdose |
| 14 | Auswerteeinheit |
| 15 | Feder |
| 16 | Kolben |
| 17 | Zylindereinheit |
| 18 | Querlenker |
| 19 | Achsschenkel |
| 20 | Radnabe |
| 21 | Radlager |
| 22 | Innenring |
| 23 | Außenring |
| 24 | Dichtring auf Fahrzeugaußenseite |
| 25 | Dichtring auf Fahrzeuginnenseite |
| 26 | Bremsscheibe |
| 27 | Bremszange |
| 28 | Bremsbelag |
| 29 | Bremsbelag |
| 30 | Karosserie |
| 31 | Sensorträger |
| 32 | Draht (Verbindung Sensor 4/Auswerteeinheit 14) |
| 33 | Draht (Verbindung Sensor 5/Auswerteeinheit 14) |
| 34 | Draht (Verbindung Kraftmessdose 12/Auswerteeinheit 14) |
| 35 | Draht (Verbindung Auswerteinheit 14/Anzeigeeinheit 36) |
| 36 | Anzeigeeinheit |
| 37 | Luftdruckanzeige |
| 38 | ABS-Kontrollämpchen |
| 39 | Draht (Verbindung Sensor 10/Auswerteeinheit 14) |
| I | Reifeninnenseite |
| RA | Rotationsachse |
| R2 | "äußerer Radius", auf dem die Marken 2 und - hinreichend genau - auch der oder die hiermit zusammenwirkenden Sensoren 4 angeordnet sind |
| R3 | "innerer Radius", auf dem die Marken 3 und - hinreichend genau - auch der oder die hiermit zusammenwirkenden Sensoren 5 angeordnet sind |
| D | Differenzwinkel eines Paares aus je einer eine Zeitspannenmessung auslösenden äußeren oder inneren Marke und einer die Zeitspannenmessung stoppenden inneren oder äußeren Marke, nachfolgend Markenpaar genannt |
| d | Differenzwinkel eines Sensorpaares |
| M | Moment |
| | Drehwinkelgeschwindigkeit mit Drehsinn |

## Patentansprüche

1. Verfahren zur Bestimmung der an einem Reifen angreifenden Längskraft während der Reifenrotation, wobei die am Reifen angreifende Längskraft aus der Torsions-Deformation des Reifens zwischen einem radial inneren Bereich des Rades oder der Nabe und einem radial äußeren Bereich des Reifens in mindestens einer nicht-rotierenden Stellung bestimmt wird,
**dadurch gekennzeichnet,** dass die - von der Messstellung abhängige - Torsions-Deformation aus einer oder mehreren Zeitspannenmessung(en) bestimmt wird, wobei die zu messende(n) Zeitspanne(n) zwischen dem Passieren mindestens zweier auf unterschiedlichem Radius zur Rotationsachse angeordneter Marken am rotierenden Rad, davon mindestens die radial äußere in einem radial äußeren Bereich des Reifens, vorbei an mindestens zwei auf entsprechendem Radius zur Rotationsachse nicht-rotierend, beispielsweise radial innen am Achsschenkel und radial außen an einem Querlenker der Radaufhängung, angeordneten Sensoren liegen.

2. Verfahren nach Anspruch 1, dadurch gekennzeichnet, dass auch die Reifeneinfederung oder die Latschlänge oder das Verhältniss der von einem Reifen aufgenommenen Radlast zum Reifenluftdruck, kurz das Last-Druck-Verhältniss, bestimmt wird, wozu die - von der Messstellung abhängige - Torsions-Deformation des Reifens zwischen einem radial inneren Bereich des Rades und einem radial äußeren Bereich des Reifens in mindestens zwei nicht-rotierenden Stellungen bestimmt wird, wobei mindestens eine der beiden Messstellungen nicht senkrecht über oder unter der Radachse liegt.

3. Verfahren nach Anspruch 2 dadurch gekennzeichnet, dass die Bestimmung der Torsions-Deformation des Reifens auch in der zweiten nicht-rotierenden Stellung während der Reifenrotation erfolgt durch Messung einer oder mehrerer Zeitspannen zwischen dem Passieren mindestens zweier auf unterschiedlichem Radius zur Rotationsachse angeordneter Marken am rotierenden Rad vorbei an mindestens zwei auf entsprechendem Radius zur Rotationsachse nicht-rotierend angeordneten Sensoren.

4. Verfahren nach Anspruch 1, dadurch gekennzeichnet, daß

   a) in einem radial äußeren Bereich des zum Rad gehörenden Reifens der Zeitpunkt (die Zeitpunkte) des Passierens einer oder mehrerer am Reifen angeordneter Marke(n) vorbei an mindestens einem äußeren, nicht-rotierenden Sensor registriert wird (werden), nachfolgend äußerer (äußere) Zeitpunkt(e) genannt, und
   b) in einem radial weiter inneren Bereich des Rades der Zeitpunkt (die Zeitpunkte) des Passierens einer oder mehrerer am Rad - zum Beispiel im Reifenwulstbereich oder an der Felge oder, bevorzugt, in der Radnabe - angeordneten Marke(n) vorbei an zumindest einem inneren, nicht-rotierenden Sensor registriert wird (werden), nachfolgend innerer (innere) Zeitpunkt(e) genannt, und
   c) die Zeitspanne(n) zwischen dem (den) äußeren Zeitpunkt(en) und dem (den) inneren Zeitpunkt(en) gemessen und ausgewertet wird (werden),
   d) wobei das Auswerten eine Division der gemäß c) gemessenen Zeitspanne(n) durch die weiterhin zu bestimmende Periodendauer beinhaltet, wobei die Periodendauer die Zeitspanne für eine Radumdrehung oder ein bestimmter Bruchteil davon ist.

5. Verfahren nach Anspruch 4, dadurch gekennzeichnet, daß das Passieren einer inneren Marke an einem inneren Sensor vorbei eine Zeitspannenmessung, vorzugsweise mittels elektronischer Stoppuhr, auslöst und das Passieren einer äußeren Marke an einem äußeren Sensor vorbei die Zeitspannenmessung stoppt.

6. Verfahren nach Anspruch 4, dadurch gekennzeichnet, daß das Passieren einer äußeren Marke an einem äußeren Sensor vorbei eine Zeitspannenmessung, vorzugsweise mittels elektronischer Stoppuhr, auslöst und das Passieren einer inneren Marke an einem inneren Sensor vorbei die Zeitspannenmessung stoppt.

7. Verfahren nach den Ansprüchen 5 und 6, dadurch gekennzeichnet, daß von den beiden gemessenen Zeitspannen die eine ein positives und die andere ein negatives Vorzeichen erhält und von beiden die betragsmäßig kleinere Zeitspanne verwertet wird.

8. Verfahren entweder nach Anspruch 5 oder nach Anspruch 6,

   - mit einem Differenzwinkel (D) eines Markenpaares bestehend aus einer inneren und einer äußeren Marke, wobei dieser Differenzwinkel (D) definiert ist als der Winkel zwischen der Phasenebene der einen Marke und der Phasenebene der anderen Marke, wobei die Phasenebene einer Marke definiert ist als die die Radachse enthaltende Ebene, in der die jeweilige Marke auf dem Rade angeordnet ist,
   - mit einem Differenzwinkel (d) eines Sensorpaares bestehend aus einem inneren und einem äußeren Sensor, wobei dieser Differenzwinkel (d) definiert ist als der Winkel zwischen der Stellungsebene des einen Sensors und der Stellungsebene des anderen Sensors, wobei diestellungsebene eines Sensors definiert ist als die die Radachse enthaltende Ebene, in der der jeweilige Sensor nicht-rotierend angeordnet ist,

- dadurch gekennzeichnet, daß zur Vermeidung von Zeitspannen unterschiedlichen Vorzeichens der Differenzwinkel (D) des Markenpaares um mindestens soviel vom Differenzwinkel (d) des Sensorpaares abweicht wie der Verdrehwinkel zwischen äußerem und innerem Bereich unter maximaler Beanspruchung des Rades, und
- daß von dem bezeichneten Markenpaar nur eine bestimmte Marke, also entweder die innere oder die äußere, die Zeitspannenmessung auslöst und die andere Marke, also entweder die äußere beziehungsweise die innere, die Zeitspannenmessung stoppt.

9. Verfahren zumindest nach Anspruch 8, nicht nach Anspruch 15, dadurch gekennzeichnet, daß der Differenzwinkels (D) eines Markenpaares zu Null gesetzt ist, beide Marken also in der gleichen Phasenebene angeordnet sind.

10. Verfahren zumindest nach Anspruch 8, nicht nach Anspruch 9, dadurch gekennzeichnet, daß der Differenzwinkels (d) eines Sensorpaares zu Null gesetzt ist, beide Sensoren also in der gleichen Stellungsebene angeordnet sind.

11. Verfahren nach einem der vorangehenden Ansprüche, dadurch gekennzeichnet, daß mehrere Markenpaare auf dem Rade angeordnet sind und jedes Sensorpaar die pro Radumdrehung mehreren Zeitspannen zwischen dem Passieren der beiden Marken eines jeden Markenpaares mißt.

12. Verfahren nach Anspruch 11, dadurch gekennzeichnet, daß jedes der Markenpaare den gleichen Differenzwinkel (D) aufweist.

13. Verfahren nach Anspruch 12, dadurch gekennzeichnet, daß die Markenpaare ungleichmäßig auf dem Rade verteilt sind.

14. Verfahren nach Anspruch 4, dadurch gekennzeichnet, daß mehrere Sensorpaare nicht-rotierend in Radnähe in verschiedenen Stellungsebenen angeordnet sind und jedes Markenpaar in den verschiedenen Stellungen je eine Zeitspannenmessung zwischen dem Passieren der beiden Marken des jeweiligen Markenpaares bewirkt.

15. Verfahren nach den Ansprüchen 2 und 14, vorzugsweise überdies nach Anspruch 10, wobei eine Stellung senkrecht über der Radachse mit 0° bezeichnet wird und andere Stellungen nach deren Winkel im Rad-Drehsinn zur 0°-Stellung benannt werden, dadurch gekennzeichnet,

a) daß zwei Sensorpaare angeordnet sind,
b) von denen eines etwa in der 90°- oder in der 270°-Stellung angeordnet ist,
c) von denen ein zweites in der 270°- bzw. 90°-Stellung angeordnet ist,
d) wobei die in diesen beiden Stellungen gemäß Anspruch 9, Merkmal c) etwa gleichzeitig gemessenen Zeitspannen voneinander subtrahiert werden und
f) diese Zeitspannendifferenz entsprechend der empirisch bekannten Funktion der Reifeneinfederung im Latsch oder der Latschlänge jeweils über dieser Zeitspannendifferenz oder über dem Reifen-Verzerrwinkel in den Stellungen gemäß b) und c) in das Maß der Reifeneinfederung bzw. der Latschlänge bzw. des Last-Druck-Verhältnisses umgerechnet wird.

16. Verfahren nach den Ansprüchen 1 und 14, vorzugsweise überdies nach Anspruch 10, wobei eine Stellung senkrecht über der Radachse mit 0° bezeichnet wird und andere Stellungen nach deren Winkel im Rad-Drehsinn zur 0°-Stellung benannt werden, dadurch gekennzeichnet,

a) daß zwei Sensorpaare angeordnet sind,
b) von denen eines etwa in der 90°- oder in der 270°-Stellung angeordnet ist,
c) von denen ein zweites in der 270°- bzw. 90°-Stellung angeordnet ist,
e) wobei die in diesen beiden Stellungen gemäß Anspruch 9, Merkmal c) etwa gleichzeitig gemessenen Zeitspannen zueinander addiert werden und
f) diese Zeitspannensumme entsprechend der empirisch bekannten Funktion der Reifenlängskraft über dieser Zeitspannensumme oder über dem Reifen-Verzerrwinkel in den Stellungen gemäß b) und c) in das Maß der Reifenlängskraft umgerechnet wird.

17. Verfahren nach Anspruch 15 und 16, indem also sowohl die Zeitspannenaddition als auch die -subtraktion ausgeführt wird, zur Bestimmung der Reifenlängskraft und zumindest einer der Größen Reifeneinfederung und Reifenlatschlänge und Last-Druck-Verhältnis.

**18.** Verfahren nach Anspruch 4, wobei eine Stellung senkrecht über der Radachse mit 0° bezeichnet wird und andere Stellungen nach deren Winkel im Rad-Drehsinn zur 0°-Stellung benannt werden, dadurch gekennzeichnet, daß ein Sensorpaar in der 0°-Stellung angeordnet ist und die in dieser Stellung zu messende Zeitspanne, die weitgehend unabhängig von der Reifeneinfederung und der Reifenlatschlänge ist, entsprechend der empirisch bekannten Funktion der Reifenlängskraft über dieser Zeitspanne oder über dem Reifen-Verzerrwinkel in dieser Stellung in das Maß der Reifenlängskraft umgerechnet wird.

**19.** Verfahren nach den Ansprüchen 14 und 18, dadurch gekennzeichnet,

a) daß zwei Sensorpaare angeordnet sind,
b) von denen eines etwa in der 0°-Stellung angeordnet ist,
c) von denen ein zweites in der 90°- oder in der 270°-Stellung angeordnet ist,
d) wobei die in diesen beiden Stellungen gemäß Anspruch 4, Merkmal c) etwa gleichzeitig gemessenen Zeitspannen in der Weise ausgewertet werden, daß
e) die momentane Reifenlängskraft aus der in der 0°-Stellung ermittelten Zeitspanne ermittelt wird durch Eingabe dieser Zeitspanne in die empirisch bekannte und gespeicherte Funktion der Reifenlängskraft über dieser Zeitspanne oder über dem Reifen-Verzerrwinkel und
f) von der in der Senkrechten - also in der 0°-Stellung - gemessene Zeitspanne die in der 90°- oder 270°-Stellung gemessenen Zeitspannen subtrahiert wird und davon der Betrag gebildet wird und
g) diese Zeitspannendifferenz entsprechend der empirisch bekannten und gespeicherten Funktion der Reifeneinfederung im Latsch oder der Latschlänge oder des Last-Druck-Verhältnisses jeweils über dieser Zeitspanne oder über dem Reifen-Verzerrwinkel in der betreffenden Stellung und über der momentanen Reifenlängskraft in das Maß der Reifeneinfederung bzw. der Latschlänge bzw. das Last-Druck-Verhältnis umgerechnet wird.

**20.** Verfahren nach Anspruch 14, vorzugsweise 15 oder 19, dadurch gekennzeichnet, daß zusätzlich der Reifenluftdruck in an sich bekannter Weise - zum Beispiel durch ein mitrotierendes Manometer mit Datenübertragung per Funk an die nicht rotierende Auswerteeinheit - bestimmt wird und die Radlast hieraus und aus dem Last-Druck-Verhältnis bestimmt wird.

**21.** Verfahren nach Anspruch 14, vorzugsweise 15 oder 19, dadurch gekennzeichnet, daß zusätzlich die Radlast in an sich bekannter Weise - zum Beispiel durch Dehnungsmeßstreifen an der zugeordneten Fahrwerksfeder - bestimmt wird und der Reifenluftdruck hieraus und aus dem Last-Druck-Verhältnis bestimmt wird.

**22.** Verfahren nach Anspruch 14 dadurch gekennzeichnet, daß die Funktion der Reifenverzerrung in Abhängigkeit von der Reifeneinfederung bzw. Latschlänge bzw. Last-Druck-Verhältnis und von der Reifenlängskraft gespeichert ist, wobei die Zeitspannenmessungen in den verschiedenen Stellungen, deren Quotient durch die Periodendauer als Maß der Reifen-Verzerrung eingesetzt werden, analog der Ansprüche 15 bis 19 miteinander kombiniert werden.

**23.** Verfahren nach Anspruch 14, vorzugsweise 15 oder 19 dadurch gekennzeichnet, daß die Reifeneinfederung oder Latschlänge oder das Last-Druck-Verhältnis bestimmt wird und ab Überschreiten eines jeweiligen Grenzwertes eine Warnung vor zu geringem Luftdruck an den Fahrer abgegeben wird und/oder die erreichbare Höchstgeschwindigkeit - ggf. außentemperatur- und/oder reifentypabhängig - so weit abgesenkt wird, daß ein Reifenausfall durch übergroße Walkbeanspruchung ausgeschlossen ist.

**24.** Verfahren nach Anspruch 20 - also mit Reifenluftdruckmessung in an sich bekannter Weise - dadurch gekennzeichnet, daß ab Überschreiten eines Grenzwertes für die Radlast eine Warnung vor - vorzugsweise - zu hoher Radlast oder vor zu geringem Luftdruck an den Fahrer abgegeben wird und/oder die erreichbare Höchstgeschwindigkeit - ggf. außentemperatur- und/oder reifentypabhängig - so weit abgesenkt wird, daß einReifenausfall durch übergroße Walkbeanspruchung ausgeschlossen ist und/oder das Starten des Fahrzeuges überhaupt verhindert wird.

**25.** Verfahren nach Anspruch 21 - also mit Radlastmessung in an sich bekannter Weise - dadurch gekennzeichnet, dass ab Unterschreiten eines Grenzwertes für den Reifenluftdruck eine Warnung vor zu geringem Luftdruck an den Fahrer abgegeben wird und/oder die erreichbare Höchstgeschwindigkeit - ggf. außentemperatur- und/oder reifentypabhängig - so weit abgesenkt wird, dass ein Reifenausfall durch übergroße Walkbeanspruchung ausgeschlossen ist.

**26.** Verfahren nach Anspruch 1 und/oder 2 mit einer Längskraftmessung dadurch gekennzeichnet, dass etwa in der 0°- und in der 90°- oder 270°-Stellung jeweils ein (auch) den Axialabstand zu den passierenden Marken erfassender Sensor nicht-rotierend angeordnet ist und aus den so erfassten Paaren von Axialabständen die Reifenquerkraft bestimmt wird.

27. Vorrichtung zur Bestimmung der an einem Reifen während seiner Rotation angreifenden Längskraft zur Durchführung eines Verfahrens nach Anspruch 1 oder zusätzlich zum Verfahren nach Anspruch 1, zur Bestimmung zumindest einer der an einem Reifen während seiner Rotation sich einstellenden Größen Reifeneinfederung, Latschlänge oder Last-Druck-Verhältnis zur Durchführung eines Verfahrens nach Anspruch 2 **gekennzeichnet durch**

- mindestens eine am Reifen (9) in einem radial äußeren Bereich auf einem Radius R2 zur Radrotationsachse angeordnete erste Marke (2),
- mindestens eine gegenüber der ersten Marke (2) radial weiter innen am Rad - zum Beispiel im Reifenwulstbereich oder an der Felge oder, bevorzugt, an der Nabe - auf einem Radius R3 zur Radrotationsachse angeordnete zweite Marke (3),
- mindestens einen nicht-rotierend etwa auf dem Radius R2 angeordneten Sensor (4) zur Feststellung des Passierens der ersten Marke(n) (2) und
- mindestens einen nicht-rotierend etwa auf dem Radius R3 angeordneten Sensor (5) zur Feststellung des Passierens der zweiten Marke(n) (3),
- eine mit den Sensoren (4, 5) in Wirkverbindung stehende Meßeinheit zur Messung der Zeitspannen zwischen dem Passieren von auf verschiedenem Radius befindlichen Marken (2, 3) und durch
- eine Auswerteeinheit (14) zur Ermittlung der Reifenlängskraft und/oder Reifeneinfederung oder Latschlänge oder Last-Druck-Verhältnis aus diesen Zeitspannen.

28. Vorrichtung nach Anspruch 27 dadurch gekennzeichnet, daß die Auswerteeinheit eine Schaltung beinhaltet, die die gemessenen Zeitspannen durch die jeweils gemessene Periodendauer dividiert und so den oder die jeweiligen örtlichen Torsionswinkel (Alpha) zwischen dem bzw. den Markenpaar(en) (2, 3) in der bzw. in den durch den Ort der Sensoren bestimmten Stellungen ermittelt, wobei die Auswerteeinheit ferner die Funktion(en) der Reifen-Längskraft oder der Reifeneinfederung oder der Latschlänge oder des Last-Druck-Verhältnisses über dem bzw. über den Torsionswinkel(n) gespeichert enthält und durch Eingabe des bzw. der ermittelten Torsionswinkel(s) schließlich die Reifen-Längskraft oder die Reifeneinfederung oder die Latschlänge oder das Last-Druck-Verhältnis berechnet.

29. Vorrichtung nach Anspruch 27, dadurch gekennzeichnet, daß die wenigstens eine erste Marke (2) gegenüber der wenigstens einen zweiten Marke (3) in Umfangsrichtung versetzt angeordnet ist.

30. Vorrichtung nach Anspruch 27, dadurch gekennzeichnet, daß der oder die Sensoren (4) zur Erkennung der ersten (also radial äußeren) Marke(n) auf eine Änderung der magnetischen Flußdichte anspricht.

31. Vorrichtung nach Anspruch 30, dadurch gekennzeichnet, daß der zu überwachende Reifen (9) über mindestens eine Gürtellage aus Stahlcord verfügt, die auf der Reifenseite (I), die bezüglich des Fahrzeuges nach axial innen weist, eine Schnittkante aufweist, wobei zumindest eines, vorzugsweise etwa jedes dritte, der stahldrahtenden als erste Marke(n) ausgebildet ist, vorzugsweise durch eine Erstreckung weiter nach axial innen.

32. Vorrichtung nach Anspruch 27, wobei die Reifenseitenwand Marken trägt, dadurch gekennzeichnet, daß der oder die Sensoren (4) zur Erkennung der ersten Marke(n) auf eine Änderung der Lichtreflexion anspricht und, daß der zu überwachende Reifen (9) zumindest auf der Reifenseite (I), die bezüglich des Fahrzeuges nach axial innen weist, eine Profilierung des Laufstreifens und/oder der Reifenstirnseite, vorzugsweise ein Seitendecor, mit mindestens einer nicht in Umfangsrichtung verlaufenden Rille, nachfolgend Querrille genannt, aufweist, wobei zumindest eine, vorzugsweise alle, Querrille(n) als erste Marke(n) so ausgebildet sind, daß sie von dem oder den vorgenannten Sensor(en) erkannt werden.

33. Vorrichtung nach Anspruch 27, vorzugsweise nach 31 oder 32, dadurch gekennzeichnet, daß sie in einem ersten Betriebsstadium bei vorzugsweise etwa konstanter Fahrzeuggeschwindigkeit die Phasenlage der ersten Marke(n) relativ zueinander und/oder relativ zu der oder den inneren Marke(n) erkennt und und in der Auswerteeinheit speichert.

34. Vorrichtung nach Anspruch 33, wobei die Anzahl der von äußeren Sensor(en) erkannten äußeren Marke(n) von der Anzahl der von inneren Sensor(en) erkannten inneren Marke(n) abweicht, dadurch gekennzeichnet, daß die Auswerteeinheit ein Auswahlprogramm enthält, welches die zur Markenpaarbildung - vorzugsweise gemäß Anspruch 8 - am besten geeignete(n) Marke(n) innerhalb jeder der beiden Markenspuren auswählt.

35. Vorrichtung nach Anspruch 27, dadurch gekennzeichnet, daß entweder die Phasenlage der ersten, ggf. ausgewählten, Marken (2) auf die Phasenlage der zweiten Marken (3) abgestimmt ist, oder umgekehrt die Phasenlage der zweiten, ggf. ausgewählten, Marken (3) auf die Phasenlage der ersten Marken (2) abgestimmt ist und zwar so, daß für alle zeitspannenmessenden Markenpaare (2, 3) die (im Anspruch 8 definierten) Differenzwinkel (D) gleich groß sind.

36. Vorrichtung nach Anspruch 27, vorzugsweise nach Anspruch 35, dadurch gekennzeichnet, daß die - ggf. ausgewählten - Paare aus je einer äußeren und je einer inneren Marke ungleichmäßig über dem Umfang verteilt sind bei gleichem Differenzwinkel (D) für alle Markenpaare.

37. Vorrichtung nach Anspruch 27, nicht 35, dadurch gekennzeichnet, daß die Phasenlage der ersten und zweiten Marken nicht aufeinander abgestimmt ist und die Auswerteeinheit durch statistische Auswertung, vorzugsweise in einer ersten Betriebsphase, die Unterschiede zwischen den verschiedenen Differenzwinkeln ($D_n$) von Markenpaaren ($2_n$, $3_n$) mißt und speichert und diese zur Korrektur der jeweiligen Zeitspannenmessungen verwendet.

38. Vorrichtung nach einem der Ansprüche 27 bis 37, dadurch gekennzeichnet, daß das mindestens eine nicht-rotierende Sensorpaar, bestehend aus einem äußeren Sensor (4) und einem inneren Sensor (5), etwa in der 0°-Stellung angeordnet ist, wobei eine Stellung senkrecht über der Radachse mit 0° bezeichnet ist.

39. Vorrichtung nach einem der Ansprüche 27 bis 38, dadurch gekennzeichnet, daß eine Mehrzahl von nicht-rotierenden Paaren von Sensoren (4, 5) vorgesehen ist in einer ausreichend genauen Abstimmung auf die Radien (R2 und R3), auf denen die Marken (2, 3) des wenigstens einen Markenpaares am Rad (1), ggf. dem Reifen (9) angeordnet sind.

40. Vorrichtung nach einem der vorangehenden Ansprüche 27 bis 39 mit mindestens zwei in unterschiedlicher Stellung angebrachten Sensorpaaren, wobei die Sensorpaare in den Stellungen 0° und 90° (entsprechend Anspruch 24), oder 0° und 270° (entsprechend Anspruch 24), oder 90° und 270° (entsprechend den Ansprüchen 20 oder 21), oder - bei drei Sensorpaaren - in den Stellungen 270° und 0° und 90° angeordnet sind.

41. Vorrichtung nach einem der vorangehenden Ansprüche 27 bis 40, welche das Last-Druck-Verhältnis bestimmt, dadurch gekennzeichnet, daß die Auswerteeinheit (14) mit einem Reifeninnendruck- (13) oder einem Radlastsensor (12) in Wirkverbindung steht, und daß sie (14) die Radlast bzw. den Reifeninnendruck berechnet.

42. Vorrichtung nach einem der vorangehenden Ansprüche 27 bis 40, nicht 41, welche das Last-Druck-Verhältnis bestimmt, dadurch gekennzeichnet, daß die Auswerteeinheit (14) weder mit einem Reifeninnendruck- noch mit einem Radlastsensor in Wirkverbindung steht, und daß sie (14) aber dennoch eine Warnung und/oder eine Begrenzung der Höchstgeschwindigkeit bewirkt, wenn das Last-Druck-Verhältnis einen fahrzeugtyp-spezifischen Schwellwert überschreitet.

43. Vorrichtung nach einem der Ansprüche 27 bis 42, wobei eine Stellung senkrecht über der Radachse mit 0° bezeichnet ist und andere Stellungen nach deren Winkel im Raddrehsinn zur 0°-Stellung benannt sind, dadurch gekennzeichnet, dass zumindest ein äußerer, abstandsmessender Sensor (10) etwa in der 90° - oder in der 270°-Stellung angeordnet ist, vorzugsweise noch ein abstandsmessender Sensor (10) auch in der 0°-Stellung angeordnet ist, wobei vorzugsweise abstandsmessender Sensor (10) und ein äußerer zeitspannenmessender Sensor (4) in einem Bauteil vereint sind, wobei aus dem bzw. den, an dem bzw. den Sensor(en) (10 und ggf. 4) gemessenen, Axialabstand bzw. Axialabständen die Reifenquerkraft in einer Auswerteeinheit (14) bestimmt wird.

44. Fahrzeugreifen, der eine Vielzahl von Marken (2) aufweist, zum Beispiel auf der Seitenwand (1), dadurch gekennzeichnet, dass er mindestens in seinem radial äußeren Bereich, vorzugsweise in der Seitenwand (1) oder im Schulterbereich, eine kreisförmige Spur von Marken (2) aufweist, deren Passieren vorbei an Sensoren magnetisch oder induktiv erkennbar ist, sodass er geeignet ist für eine Vorrichtung nach einem der Ansprüche 27 bis 43 und/oder für die Durchführung eines Verfahrens nach einem der Ansprüche 1 bis 26.

45. Fahrzeugreifen nach Anspruch 44, dadurch gekennzeichnet, dass in der Seitenwand (1), vorzugsweise im Wulstbereich, mindestens eine weitere, gegenüber der Marke bzw. den Marken (2) radial weiter innen liegende Marke (3) angeordnet ist.

46. Fahrzeugreifen nach Anspruch 44 oder 45, dadurch gekennzeichnet, dass in der Seitenwand (1), vorzugsweise im Wulstbereich, mehrere weitere, gegenüber der Marke bzw. den Marken (2) radial weiter innen liegende Marken (3) auf einem Kreis angeordnet sind.

47. Fahrzeugreifen nach einem der Ansprüche 44 bis 46, dadurch gekennzeichnet, dass die äußeren und inneren Marken so paarweise angeordnet sind, dass für alle zeitspannenmessenden Markenpaare die (im Anspruch 8 definierten) Differenzwinkel (D) gleich groß, vorzugsweise ungleich Null sind.

48. Fahrzeugreifen nach zumindest einem der Ansprüche 44 bis 47, dadurch gekennzeichnet, dass die Marken (2, 3) aus Metall bestehen.

49. Fahrzeugreifen nach zumindest einem der Ansprüche 44 bis 48, dadurch gekennzeichnet, dass zumindest einige der Marken (2, 3) magnetisch sind.

50. Fahrzeugreifen nach zumindest einem der Ansprüche 44 bis 49, dadurch gekennzeichnet, dass die Marken (2, 3) über die Seitenwand (1) hervorstehen.

**Claims**

1. Method of determining the longitudinal force, which acts on a tyre, during the tyre rotation, the longitudinal force, which acts on the tyre and results from the torsional deformation of the tyre between a radially inner region of the wheel or the hub and a radially outer region of the tyre, being determined in at least one non-rotating position, characterised in that the torsional deformation - dependent on the measuring position - is determined from one or more time interval measurements, the time interval(s) to be measured lying between the passing of at least two marks, which are disposed on a variable radius relative to the axis of rotation, on the rotating wheel, at least the radially outer mark in a radially outer region of the tyre, past at least two sensors, which are non-rotatingly disposed on a corresponding radius relative to the axis of rotation, for example radially internally on the axial portion and radially externally on a transverse guide means of the wheel suspension.

2. Method according to claim 1, characterised in that the inward oscillation of the tyre or the length of the ground-engaging surface or the ratio of the wheel load, absorbed by a tyre, relative to the air pressure of the tyre, the load: pressure ratio for short, is also determined, wherefor the torsional deformation - dependent on the measuring position - of the tyre between a radially inner region of the wheel and a radially outer region of the tyre is determined in at least two non-rotating positions, at least one of the two measuring positions not lying vertically above or below the wheel axle.

3. Method according to claim 2, characterised in that the determination of the torsional deformation of the tyre is also effected in the second non-rotating position during the tyre rotation by measuring one or more time intervals between the passing of at least two marks, which are disposed on a variable radius relative to the axis of rotation, on the rotating wheel past at least two sensors, which are non-rotatingly disposed on a corresponding radius relative to the axis of rotation.

4. Method according to claim 1, characterised in that

   a) in a radially outer region of the tyre belonging to the wheel, the moment (the moments) when one or more marks, disposed on the tyre, passes or pass at least one outer, non-rotating sensor is (are) recorded, hereinafter called the outer moment(s), and
   b) in a radially further inner region of the wheel, the moment (the moments) when one or more marks disposed on the wheel - for example in the tyre bead region or on the rim or, preferably, in the wheel hub - passes or pass at least one inner, non-rotating sensor is (are) recorded, hereinafter called the inner moment(s), and
   c) the time interval(s) between the outer moment(s) and the inner moment(s) is (are) measured and evaluated,
   d) the evaluation including a division of the time interval(s), measured according to c), by the period which is still to be determined, the period being the time interval for a wheel rotation or a predetermined fraction thereof.

5. Method according to claim 4, characterised in that the passing of an inner mark past an inner sensor triggers a time interval measurement, preferably by means of an electronic stop-watch, and the passing of an outer mark past an

EP 0 783 419 B1

outer sensor stops the time interval measurement.

6. Method according to claim 4, characterised in that the passing of an outer mark past an outer sensor triggers a time interval measurement, preferably by means of an electronic stop-watch, and the passing of an inner mark past an inner sensor stops the time interval measurement.

7. Method according to claims 5 and 6, characterised in that one of the two measured time intervals receives a plus sign, and the other time interval receives a minus sign, and the smaller time interval of the two, in terms of magnitude, is used.

8. Method either according to claim 5 or according to claim 6,

   - using a differential angle (D) of a pair of marks comprising an inner mark and an outer mark, this differential angle (D) being defined as the angle between the phase plane of one mark and the phase plane of the other mark, the phase plane of a mark being defined as the plane which contains the wheel axle and in which the respective mark is disposed on the wheel, and
   - using a differential angle (d) of a pair of sensors comprising an inner sensor and an outer sensor, this differential angle (d) being defined as the angle between the positional plane of one sensor and the positional plane of the other sensor, the positional plane of a sensor being defined as the plane which contains the wheel axle and in which the respective sensor is non-rotatingly disposed, characterised in that, to avoid time intervals of variable signs, the differential angle (D) of the pair of marks differs from the differential angle (d) of the pair of sensors by at least as much as the rotational angle between the outer and inner regions, with maximum stress of the wheel, and
   - in that, of the designated pair of marks, only one predetermined mark, that is to say either the inner mark or the outer mark, triggers the time interval measurement, and the other mark, that is to say either the outer mark or respectively the inner mark, stops the time interval measurement.

9. Method at least according to claim 8, not according to claim 15, characterised in that the differential angle (D) of a pair of marks is set to zero, both marks therefore being disposed in the same phase plane.

10. Method at least according to claim 8, not according to claim 9, characterised in that the differential angle (d) of a pair of sensors is set to zero, both sensors therefore being disposed in the same positional plane.

11. Method according to one of the preceding claims, characterised in that a plurality of pairs of marks are disposed on the wheel, and each pair of sensors measures the time intervals, which are several per wheel rotation, between the passing of the two marks of each pair of marks.

12. Method according to claim 11, characterised in that each of the pairs of marks has the same differential angle (D).

13. Method according to claim 12, characterised in that the pairs of marks are uniformly distributed over the wheel.

14. Method according to claim 4, characterised in that a plurality of pairs of sensors are non-rotatingly disposed in the vicinity of the wheel in various positional planes, and each pair of marks in the various positions causes a time interval measurement between the passing of the two marks of the respective pair of marks.

15. Method according to claims 2 and 14, preferably also according to claim 10, wherein a position vertically above the wheel axle is denoted by 0°, and other positions are named according to their angles in the direction of rotation of the wheel relative to the 0° position, characterised in that

   a) two pairs of sensors are provided,
   b) one pair of which is disposed substantially in the 900 position or in the 270° position,
   c) a second pair of which is disposed in the 270° or 90° position respectively,
   d) wherein the time intervals, which are measured substantially simultaneously in these two positions according to feature c) of claim 4, are subtracted from one another, and
   f) this time interval difference, corresponding to the empirically known function of the inward oscillation of the tyre in the ground-engaging surface or in the length of the ground-engaging surface, is respectively converted into the dimension of the inward oscillation of the tyre or respectively of the length of the ground-engaging surface or respectively of the load:pressure ratio over this time interval difference or over the angle of tyre distortion in the positions according to b) and c).

16. Method according to claims 1 and 14, preferably also according to claim 10, wherein a position vertically above the wheel axle is denoted by 0°, and other positions are named according to their angles in the direction of rotation of the wheel relative to the 0° position, characterised in that

    a) two pairs of sensors are provided,
    b) one pair of which is disposed substantially in the 90° position or in the 270° position,
    c) a second pair of which is disposed in the 270° or 90° position respectively,
    e) wherein the time intervals, which are measured substantially simultaneously in these two positions according to feature c) of claim 4, are added together, and
    f) this time interval sum, corresponding to the empirically known function of the longitudinal force of the tyre, is converted into the dimension of the longitudinal force of the tyre over this time interval sum or over the angle of tyre distortion in the positions according to b) and c).

17. Method according to claims 15 and 16, that is to say wherein both the time interval addition and the time interval subtraction are effected, for determining the longitudinal force of the tyre and at least one of the parameters: inward oscillation of the tyre and length of the ground-engaging surface of the tyre and load:pressure ratio.

18. Method according to claim 4, wherein a position vertically above the wheel axle is denoted by 0°, and other positions are named according to their angles in the direction of rotation of the wheel relative to the 0° position, characterised in that a pair of sensors is disposed in the 0° position, and the time interval, which is to be measured in this position and is largely independent of the inward oscillation of the tyre and the length of the ground-engaging surface of the tyre, is converted into the dimension of the longitudinal force of the tyre according to the empirically known function of the longitudinal force of the tyre over this time interval or over the angle of tyre distortion in this position.

19. Method according to claims 14 and 18, characterised in that

    a) two pairs of sensors are provided,
    b) one pair of which is disposed substantially in the 0° position,
    c) a second pair of which is disposed in the 90° position or in the 270° position,
    d) wherein the time intervals, which are measured substantially simultaneously in these two positions according to feature c) of claim 4, are evaluated in such a manner that
    e) the instantaneous longitudinal force of the tyre is determined from the time interval determined in the 0° position by introducing this time interval into the empirically known and stored function of the longitudinal force of the tyre over this time interval or over the angle of tyre distortion, and
    f) the time intervals, measured in the 90° or 270° position, is subtracted from the time interval measured in the vertical - that is to say in the 0° position - and the amount is formed therefrom, and
    g) this time interval difference, corresponding to the empirically known and stored function of the inward oscillation of the tyre in the ground-engaging surface or of the length of the ground-engaging surface or of the load:pressure ratio, is respectively converted into the dimension of the inward oscillation of the tyre or respectively of the length of the ground-engaging surface or respectively of the the load:pressure ratio over this time interval or over the angle of tyre distortion in the pertinent position and over the instantaneous longitudinal force of the tyre.

20. Method according to claim 14, preferably 15 or 19, characterised in that the air pressure of the tyre is additionally determined in a manner known per se - for example by a jointly rotating manometer with data transmission by radio to the non-rotating evaluating unit - and the wheel load is determined therefrom and from the load:pressure ratio.

21. Method according to claim 14, preferably 15 or 19, characterised in that the wheel load is additionally determined in a manner known per se - for example by expansion measuring strips on the associated shock absorber - and the air pressure of the tyre is determined therefrom and from the load:pressure ratio.

22. Method according to claim 14, characterised in that the function of the tyre distortion is stored in dependence on the inward oscillation of the tyre or respectively the length of the ground-engaging surface or respectively the load:pressure ratio and on the longitudinal force of the tyre, the time interval measurements in the various positions being combined with one another analogous with claims 15 to 19, the quotient of said measurements being used throughout the period as the dimension of the tyre distortion.

23. Method according to claim 14, preferably 15 or 19, characterised in that the inward oscillation of the tyre or length of the ground-engaging surface or the load:pressure ratio is determined, and a warning is issued to the driver about too low an air pressure if a particular limit value is exceeded, and/or the attainable maximum speed - possibly dependent on external temperature and/or tyre type - is reduced to such an extent that the possibility of a tyre blow-out as a result of excessive compressive stress is excluded.

24. Method according to claim 20 - that is to say usinga measurement of the air pressure of a tyre in a manner known per se - characterised in that a warning is issued to the driver about - preferably - too high a wheel load or too low an air pressure if a limit value for the wheel load is exceeded, and/or the attainable maximum speed - possibly dependent on external temperature and/or tyre type - is reduced to such an extent that the possibility of a tyre blow-out as a result of excessive compressive stress is excluded and/or the starting of the vehicle is in fact prevented.

25. Method according to claim 21 - that is to say using a wheel load measurement in a manner known per se - characterised in that a warning is issued to the driver about too low an air pressure if a limit value for the air pressure of the tyre is not reached, and/or the attainable maximum speed - possibly dependent on external temperature and/or tyre type - is reduced to such an extent that the possibility of a tyre blow-out as a result of excessive compressive stress is excluded.

26. Method according to claim 1 and/or 2, using a longitudinal force measurement, characterised in that a respective sensor, which (also) detects the axial spacing from the passing marks, is non-rotatingly disposed substantially in the 0° position and in the 90° or 270° position, and the transverse force of the tyre is determined from the pairs of axial spacings thus detected.

27. Apparatus for determining the longitudinal force, which acts on a tyre during its rotation, for accomplishing a method according to claim 1 or, in addition to the method according to claim 1, for determining at least one of the parameters which are employed on a tyre during its rotation: inward oscillation of the tyre, length of ground-engaging surface or load: pressure ratio for accomplishing a method according to claim 2, characterised by

   - at least one first mark (2), which is disposed on the tyre (9) in a radially outer region on a radius R2 relative to the axis of rotation of the wheel,
   - at least one second mark (3), which is disposed radially further internally than the first mark (2) on the wheel - for example in the tyre bead region or on the rim or, preferably, on the hub - on a radius R3 relative to the axis of rotation of the wheel,
   - at least one sensor (4), which is non-rotatingly disposed substantially on the radius R2, for detecting the passing of the first mark(s) (2), and
   - at least one sensor (5), which is non-rotatingly disposed substantially on the radius R3, for detecting the passing of the second mark(s) (3),
   - a measuring unit, which is in operative connection with the sensors (4, 5), for measuring the time intervals between the passing of marks (2, 3), which are situated on a different radius, and characterised by
   - an evaluating unit (14) for determining the longitudinal force of the tyre and/or inward oscillation of the tyre or length of ground-engaging surface or load:pressure ratio from these time intervals.

28. Apparatus according to claim 27, characterised in that the evaluating unit includes a circuit which divides the measured time intervals by the respective measured period and thus determines the respective local torsional angle or angles (alpha) between the pair(s) of marks (2, 3) in the position or positions determined by the location of the sensors, the evaluating unit also including, in stored manner, the function(s) of the longitudinal force of the tyre or the inward oscillation of the tyre or the length of the ground-engaging surface or the load:pressure ratio over the torsional angle(s), and finally calculates the longitudinal force of the tyre or the inward oscillation of the tyre or the length of the ground-engaging surface or the load: pressure ratio by the input of the determined torsional angle(s).

29. Apparatus according to claim 27, characterised in that at least one first mark (2) is disposed in an offset manner relative to at least one second mark (3) when viewed with respect to the circumferential direction.

30. Apparatus according to claim 27, characterised in that the sensor or sensors (4) for detecting the first (that is to say the radially outer) mark(s) responds or respond to a change in the magnetic flux density.

31. Apparatus according to claim 30, characterised in that the tyre (9) to be monitored has at least one belt ply which is formed from steel cord and includes a cut edge on the tyre side (I), which extends axially inwardly relative to the vehicle, at least one of the steel wire ends, preferably substantially every third steel wire end, being configured as first mark(s), preferably as a result of an extension further axially inwardly.

32. Apparatus according to claim 27, wherein the side wall of the tyre is provided with marks, characterised in that the sensor or sensors (4) for detecting the first mark(s) responds or respond to a change in the light reflection, and in that the tyre (9) to he monitored, at least on the tyre side (I) which extends axially inwardly relative to the vehicle, has a profiling of the tread strip and/or of the end face of the tyre, preferably a lateral decoration, with at least one groove, hereinafter called transverse groove, which does not extend in the circumferential direction, at least one transverse groove, preferably all of the transverse grooves, being so configured as first mark(s) that they are detected by the above-mentioned sensor(s).

33. Apparatus according to claim 27, preferably according to 31 or 32, characterised in that, in a first operational stage, at preferably a substantially constant vehicle speed, said apparatus detects the phase position of the first mark(s) relative to one another and/or relative to the inner mark(s) and stores such in the evaluating unit.

34. Apparatus according to claim 33, wherein the number of the outer mark(s) detected by outer sensor(s) differs from the number of the inner mark(s) detected by inner sensor(s), characterised in that the evaluating unit contains a selection program, which selects the mark(s) best suited for forming pairs of marks - preferably according to claim 8 - within each of the two mark tracks.

35. Apparatus according to claim 27, characterised in that either the phase position of the first, possibly selected, marks (2) is adapted to the phase position of the second marks (3), or conversely the phase position of the second, possibly selected, marks (3) is adapted to the phase position of the first marks (2), that is to say so that the differential angles (D) (defined in claim 8) are the same size for all of the time interval measuring pairs of marks (2, 3).

36. Apparatus according to claim 27, preferably according to claim 35, characterised in that the - possibly selected - pairs, each comprising an outer mark and an inner mark, are unevenly distributed over the circumference, with the same differential angle (D) for all of the pairs of marks.

37. Apparatus according to claim 27, not 35, characterised in that the phase position of the first and second marks is not adapted one to the other, and the evaluating unit measures and stores, by statistical evaluation, preferably in a first operational phase, the differences between the various differential angles ($D_n$) of pairs of marks ($2_n$, $3_n$) and uses said differences to correct the particular time interval measurements.

38. Apparatus according to one of claims 27 to 37, characterised in that at least one non-rotating pair of sensors, comprising an outer sensor (4) and an inner sensor (5), is disposed substantially in the 0° position, one position vertically above the wheel axle being denoted by 0°.

39. Apparatus according to one of claims 27 to 38, characterised in that a plurality on non-rotating pairs of sensors (4, 5) is provided in an sufficiently correct adaptation to the radii (R2 and R3), on which the marks (2, 3) of at least one pair of marks on the wheel (1), possibly the tyre (9), are disposed.

40. Apparatus according to one of the preceding claims 27 to 39, having at least two pairs of sensors mounted in different positions, the pairs of sensors being disposed in the positions 0° and 90° (corresponding to claim 24), or 0° and 270° (corresponding to claim 24), or 90° and 270° (corresponding to claims 20 or 21), or - if there are three pairs of sensors - in the positions 270° and 0° and 90°.

41. Apparatus according to one of the preceding claims 27 to 40, which determines the load:pressure ratio, characterised in that the evaluating unit (14) is in operative connection with a sensor (13) for detecting the internal pressure of the tyre or a sensor (12) for detecting the wheel load, and in that it (14) calculates the wheel load or respectively the internal pressure of the tyre.

42. Apparatus according to one of the preceding claims 27 to 40, not 41, which determines the load: pressure ratio, characterised in that the evaluating unit (14) is in operative connection with neither a sensor for detecting the internal pressure of the tyre nor a sensor for detecting the wheel load, and in that it (14), however, nevertheless effects a warning and/or a limitation of the maximum speed when the load:pressure ratio exceeds a threshold specific to the vehicle type.

43. Apparatus according to one of claims 27 to 42, wherein one position vertically above the wheel axle is denoted by 0°, and other positions are named according to their angles in the direction of rotation of the wheel relative to the 0° position, characterised in that at least one outer spacing measuring sensor (10) is disposed substantially in the 90° position or in the 270° position, preferably another spacing measuring sensor (10) is also disposed in the 0° position, wherein preferably spacing measuring sensor (10) and an outer time interval measuring sensor (4) are combined in one component part, wherein the transverse force of the tyre is determined in an evaluating unit (14) from the axial spacing or axial spacings measured at the sensor or sensors (10 and possibly 4).

44. Vehicle tyre, which has a plurality of marks (2), for example on the side wall (1), characterised in that it has a circular track of marks (2) at least in its radially outer region, preferably in the side wall (1) or in the shoulder region, said marks being magnetically or inductively detectable as they pass sensors, so that said tyre is suitable for an apparatus according to one of claims 27 to 43 and/or for the accomplishment of a method according to one of claims 1 to 26.

45. Vehicle tyre according to claim 44, characterised in that at least one additional mark (3), which lies radially further internally than the mark or marks (2), is disposed in the side wall (1), preferably in the bead region.

46. Vehicle tyre according to claim 44 or 45, characterised in that a plurality of additional marks (3), which lie radially further internally than the mark or marks (2), are disposed in a circle in the side wall (1), preferably in the bead region.

47. Vehicle tyre according to one of claims 44 to 46, characterised in that the outer and inner marks are disposed in pairs in such a manner that the differential angles (D) (defined in claim 8) for all of the time interval measuring pairs of marks are the same size, preferably not equal to zero.

48. Vehicle tyre according to at least one of claims 44 to 47, characterised in that the marks (2, 3) are formed from metal.

49. Vehicle tyre according to at least one of claims 44 to 48, characterised in that at least some of the marks (2, 3) are magnetic.

50. Vehicle tyre according to at least one of claims 44 to 49, characterised in that the marks (2, 3) protrude beyond the side wall (1).

## Revendications

1. Procédé de détermination de la force longitudinale attaquant un pneumatique pendant la rotation du pneumatique, la force longitudinale attaquant le pneumatique étant déterminée par la déformation en torsion du pneumatique entre une zone radialement intérieure de la roue ou du moyeu et une zone radialement extérieure du pneumatique en au moins un emplacement non-rotatif,
   caractérisé en ce que la déformation en torsion - qui est fonction du lieu de mesure - est déterminée à partir d'une ou de plusieurs mesure(s) d'intervalle de temps, l'intervalle ou les intervalles de temps à mesurer étant compris entre les passages d'au moins deux repères disposés sur la roue en rotation sur des rayons différents par rapport à l'axe de rotation, et dont au moins celui qui est radialement à l'extérieur est situé dans une zone radialement extérieure du pneumatique, devant au moins deux capteurs disposés non rotatifs sur un rayon correspondant par rapport à l'axe de rotation, par exemple radialement à l'intérieur sur la fusée d'essieu et radialement à l'extérieur sur un bras oscillant transversal de la suspension de la roue.

2. Procédé selon la revendication 1, caractérisé en ce que la compression élastique du pneumatique ou la longueur de l'écrasement ou le rapport de la charge de la roue absorbée par un pneumatique à la pression de l'air du pneumatique, brièvement, le rapport à charge-pression, est déterminé et à cette fin à déformation en torsion du pneumatique - qui est fonction du lieu de mesure - est déterminée entre une zone radialement intérieure de la roue et une zone radialement extérieure du pneumatique en au moins deux emplacements non-rotatifs, au moins l'un des deux lieux de mesure n'étant pas situé vertical au-dessus ou au-dessous de l'essieu.

3. Procédé selon la revendication 2, caractérisé en ce que la détermination de la déformation en torsion du pneuma-

EP 0 783 419 B1

tique a lieu également au deuxième emplacement non-rotatif pendant la rotation du pneumatique par mesure d'un ou de plusieurs intervalle(s) de temps séparant les passages d'au moins deux repères placés sur la roue rotative, sur un rayon différent par rapport à l'axe de rotation, devant au moins deux capteurs disposés non-rotatifs sur un rayon correspondant par rapport à l'axe de rotation.

4. Procédé selon la revendication 1, caractérisé en ce que

a) l'instant (les instants) du passage d'un ou de plusieurs repère(s), qui sont disposé(s) sur le pneumatique, devant au moins un capteur extérieur non-rotatif est (sont) enregistré(s) dans une zone radialement extérieure du pneumatique faisant partie de la roue et il sera (ils seront) désigné(s) par la suite instant(s) extérieur(s), et
b) l'instant (les instants) du passage d'un ou de plusieurs repère(s) disposé(s) sur la roue - par exemple dans la région du talon du pneumatique ou sur la jante ou de préférence sur le moyeu de la roue - devant au moins un capteur intérieur non rotatif est (sont) enregistré(s) dans une zone de la roue qui est radialement plus à l'intérieur et il(s) sera (seront) désigné(s) par la suite instant(s) intérieur(s), et
c) l'intervalle (les intervalles) de temps compris entre l'instant (les instants) extérieur(s) et l'instant (les instants) intérieur(s) est (sont) mesuré(s) et analysé(s),
d) l'analyse comprenant une division de l'intervalle (des intervalles) de temps mesuré(s) selon c) par la durée de la période définie ci-dessus, la durée de la période étant l'intervalle de temps nécessaire à une révolution de la roue ou à une fraction déterminée de cette révolution.

5. Procédé selon la revendication 4, caractérisé en ce que le passage d'un repère intérieur devant un capteur intérieur déclenche une mesure d'intervalle de temps, de préférence au moyen d'un compteur de temps électronique et le passage d'un repère extérieur devant un capteur extérieur arrête la mesure de l'intervalle de temps.

6. Procédé selon la revendication 4, caractérisé en ce que le passage d'un repère extérieur devant un capteur extérieur déclenche une mesure d'intervalle de temps, de préférence au moyen d'un compteur de temps électronique et le passage d'un repère intérieur devant un capteur intérieur arrête la mesure de l'intervalle de temps.

7. Procédé selon les revendications 5 et 6, caractérisé en ce que l'un des deux intervalles de temps mesurés reçoit un signe positif et l'autre, un signe négatif et celui des deux intervalles de temps dont la valeur est la plus faible est utilisé.

8. Procédé soit selon la revendication 5, soit selon la revendication 6,

- comprenant un angle de différence (D) de deux repères consistant en un repère intérieur et un repère extérieur, cet angle de différence (D) étant défini comme étant l'angle compris entre le plan de phase d'un repère et le plan de phase de l'autre repère, le plan de phase d'un repère étant défini comme étant le plan passant par l'essieu et dans lequel le repère correspondant est disposé sur la roue,
- comprenant un angle de différence (d) de deux capteurs consistant en un capteur intérieur et un capteur extérieur, cet angle de différence (d) étant défini comme étant l'angle compris entre le plan de positionnement d'un capteur et le plan de positionnement de l'autre capteur, le plan de positionnement d'un capteur étant défini comme le plan passant par l'essieu et dans lequel le capteur particulier est disposé non-rotatif,
- caractérisé en ce que pour éviter des intervalles de temps de signes différents, l'angle de différence (D) des deux repères diffère de l'angle de différence (d) des deux capteurs d'au moins autant que l'angle de rotation entre zone extérieure et zone intérieure sous sollicitation maximale de la roue, et
- seul un repère déterminé des deux repères mentionnés, donc soit le repère intérieur, soit le repère extérieur déclenche la mesure d'intervalle de temps et l'autre repère, donc soit le repère intérieur, soit le repère extérieur arrête la mesure de l'intervalle de temps.

9. Procédé au moins selon la revendication 8, non selon la revendication 15, caractérisé en ce que l'angle de différence (D) d'un groupe de deux repères est posé comme étant égal à zéro, donc les deux repères sont disposés dans le même plan de phase.

10. Procédé au moins selon la revendication 8, non selon la revendication 9, caractérisé en ce que l'angle de différence (d) d'un groupe de deux capteurs est posé comme étant égal à zéro, donc les deux capteurs sont disposés dans le même plan de positionnement.

11. Procédé selon l'une des revendications précédentes, caractérisé en ce que plusieurs groupes de deux repères

28

sont disposés sur la roue et chaque groupe de deux capteurs mesure plusieurs intervalles de temps par révolution de la roue entre les passages des deux repères de chaque groupe de deux repères.

12. Procédé selon la revendication 11, caractérisé en ce que chaque groupe de deux repères présente le même angle de différence (D).

13. Procédé selon la revendication 12, caractérisé en ce que les groupes de deux repères sont répartis irrégulièrement sur la roue.

14. Procédé selon la revendication 4, caractérisé en ce que plusieurs groupes de deux capteurs sont disposés non-rotatifs à proximité de la roue dans différents plans de positionnement et chaque groupe de deux repères provoque aux différents emplacements une mesure d'intervalle de temps séparant les passages des deux repères de chaque groupe de deux repères.

15. Procédé selon les revendications 2 et 14, de préférence de plus selon la revendication 10, une position située verticalement au dessus de l'essieu étant désignée 0° et les autres positions étant désignées, selon leur angle dans le sens de rotation de la roue, position par rapport à 0°, caractérisé

    a) en ce que deux groupes de deux capteurs sont disposés,
    b) dont l'un est disposé à peu près à la position de 90° - ou de 270° -,
    c) dont un deuxième est disposé à la position de 270° - ou de 90° -,
    d) les intervalles de temps mesurés à peu près simultanément à ces deux positions selon la revendication 9, particularité c), étant soustraits l'un de l'autre, et
    e) cette différence d'intervalles de temps étant convertie par calcul, selon la fonction empirique connue de la compression élastique du pneumatique à l'écrasement ou de la longueur de l'écrasement, dans chaque cas pendant cette différence d'intervalles de temps ou sur l'angle de déformation du pneumatique aux emplacements selon b) et c) en la mesure de la compression élastique du pneumatique ou de la longueur de l'écrasement ou du rapport charge-pression.

16. Procédé selon les revendications 1 et 14, de plus de préférence selon la revendication 10, une position située verticalement au-dessus de l'essieu étant désignée par 0° et les autres positions étant désignées selon leur angle dans le sens de rotation de la roue comme étant une position par rapport à 0°, caractérisé

    a) en ce que deux groupes de deux capteurs sont disposés,
    b) dont l'un est disposé à peu près à l'emplacement de 90° - ou à celui de 270° -,
    c) dont un deuxième est disposé à l'emplacement de 270° - ou de 90° -,
    e) les intervalles de temps mesurés à peu près simultanément à ces deux positions selon la revendication 9, particularité c), étant additionnés l'un à l'autre, et
    f) cette somme d'intervalles de temps étant convertie par calcul, selon la fonction empirique connue de la force longitudinale du pneumatique, pendant cette somme d'intervalles de temps ou sur l'angle de déformation du pneumatique aux positions selon b) et c), en la mesure de la force longitudinale du pneumatique.

17. Procédé selon les revendications 15 et 16, donc suivant lesquelles aussi bien l'addition que la soustraction des intervalles de temps est effectuée pour la détermination de la force longitudinale du pneumatique et au moins de l'une des grandeurs compression du pneumatique et longueur de l'écrasement du pneumatique, ainsi que du rapport charge-pression.

18. Procédé selon la revendication 4, un emplacement situé verticalement au-dessus de l'essieu étant désigné par 0° et d'autres emplacements étant désignés selon leur angle dans le sens de rotation de la roue par rapport à la position de 0°, caractérisé en ce qu'un groupe de deux capteurs est disposé à la position de 0° et l'intervalle de temps devant être mesuré à cette position et qui est pratiquement indépendant de la compression élastique du pneumatique et de la longueur de l'écrasement du pneumatique est converti, selon la fonction empirique connue de la force longitudinale du pneumatique pendant cet intervalle de temps ou sur l'angle de déformation du pneumatique à cette position, en la mesure de la force longitudinale du pneumatique.

19. Procédé selon les revendications 14 et 18, caractérisé

    a) en ce que deux groupes de deux capteurs sont disposés,

b) dont l'un est disposé à peu près à la position de 0°,

c) dont un deuxième est disposé à la position de 90° - ou à celle de 270° -,

d) les intervalles de temps mesurés à peu prés simultanément à ces deux positions selon la revendication 4, particularité c), étant analysés de manière que

e) la force longitudinale momentanée du pneumatique soit déterminée, d'après l'intervalle de temps déterminé à la position de 0°, par entrée de cet intervalle de temps dans la fonction empirique connue et mémorisée de la force longitudinale du pneumatique, pendant cet intervalle de temps ou sur l'angle de déformation du pneumatique, et

f) les intervalles de temps mesurés à la position de 90° - ou de 270° - sont soustraits de l'intervalle de temps mesuré sur la verticale - donc à la position de 0° - et la grandeur correspondante en est formée, et

g) cette différence d'intervalles de temps est convertie par calcul, selon la fonction empirique connue et mémorisée de la compression élastique du pneumatique à l'écrasement ou de la longueur de l'écrasement ou du rapport charge-pression, dans chaque cas pendant cet intervalle de temps ou sur l'angle de déformation du pneumatique, à la position correspondante et à l'aide de la force momentanée longitudinale du pneumatique, en la mesure de la compression élastique du pneumatique ou de la longueur d'écrasement ou du rapport charge-pression.

20. Procédé selon la revendication 14, de préférence selon la revendication 15 ou 19, caractérisé en ce qu'en plus la pression d'air du pneumatique est déterminée de manière connue - par exemple par un manomètre entraîné conjointement en rotation avec transmission des données par voie hertzienne au module d'analyse non-rotatif - et la charge de la roue est déterminée d'après cette pression d'air et d'après le rapport charge-pression.

21. Procédé selon la revendication 14, de préférence selon la revendication 15 ou 19, caractérisé en ce qu'en plus la charge de la roue est déterminée de manière connue - par exemple par une jauge extensométrique placée sur le ressort associé du châssis - et la pression d'air du pneumatique est déterminée d'après cette charge et d'après le rapport charge-pression.

22. Procédé selon la revendication 14, caractérisé en ce que la déformation du pneumatique est mémorisée en fonction de la compression élastique du pneumatique ou de la longueur de l'écrasement ou du rapport charge-pression et de la force longitudinale du pneumatique, les mesures d'intervalles de temps effectuées aux différentes positions et dont le quotient par la durée de la période est utilisé en mesure de la déformation du pneumatique étant combinées de manière analogue à celle des revendications 15 à 19.

23. Procédé selon la revendication 14, de préférence selon la revendication 15 ou 19, caractérisé en ce que la compression élastique du pneumatique ou la longueur de l'écrasement ou le rapport charge-pression est déterminé et, à partir du dépassement d'un seuil particulier, un avertissement d'une trop faible pression d'air est transmis au conducteur et/ou la vitesse maximale pouvant être atteinte - éventuellement en fonction de la température extérieure et/ou du type de pneumatique - est abaissée de manière qu'une défaillance du pneumatique par une contrainte exagérée de foulage soit exclue.

24. Procédé selon la revendication 20 - donc avec mesure de la pression d'air du pneumatique de manière connue -, caractérisé en ce que à partir d'un dépassement d'un seuil de la charge de la roue, un avertissement - de préférence - d'une charge trop élevée de la roue ou d'une pression d'air trop faible est donné au conducteur et/ou la vitesse maximale pouvant être atteinte est abaissée - éventuellement en fonction de la température extérieure et/ou du type de pneumatique - suffisamment pour qu'une défaillance du pneumatique provoquée par une sollicitation exagérée de foulage soit exclue et/ou que le démarrage du véhicule soit complètement empêché.

25. Procédé selon la revendication 21 - donc avec mesure de la charge de la roue de manière connue -, caractérisé en ce qu'à partir d'un dépassement d'un seuil de la pression d'air du pneumatique vers le bas, un avertissement d'une trop faible pression d'air est donnée au chauffeur et/ou la vitesse maximale pouvant être atteinte - éventuellement en fonction de la température extérieure et/ou en fonction du type du pneumatique - est suffisamment abaissée pour qu'une défaillance du pneumatique provoquée par une sollicitation exagérée de foulage soit exclue.

26. Procédé selon la revendication 1 et/ou 2, comprenant une mesure de force longitudinale, caractérisé en ce qu'un capteur détectant (également) la distance axiale aux repères passants est disposé non-rotatif à peu près à la position de 0° et à la position de 90° - ou de 270° - et la force transversale du pneumatique est déterminée à partir des deux distance axiales détectées.

**27.** Dispositif de détermination d'une force longitudinale attaquant un pneumatique pendant sa rotation, pour la mise en oeuvre d'un procédé selon la revendication 1 ou accessoirement du procédé selon la revendication 15 de détermination d'au moins l'une des grandeurs suivantes produites sur un pneumatique pendant sa rotation : compression élastique du pneumatique, longueur de l'écrasement ou rapport charge-pression, pour la mise en oeuvre d'un procédé selon la revendication 2
caractérisé par

- au moins un premier repère (2) dispose sur le pneumatique (9) dans une zone radialement extérieure sur un rayon R2 par rapport à l'axe de rotation,
- au moins un deuxième repère (3) disposé par rapport au premier repère (2) radialement plus à l'intérieur sur la roue - par exemple dans la zone d'un talon du pneumatique ou sur la jante ou de préférence sur le moyeu - sur un rayon R3 par rapport à l'axe de rotation,
- au moins un capteur (4) disposé non-rotatif à peu près sur le rayon R2 pour la détection du passage du (des) premier(s) repère(s) (2) et
- au moins un capteur (5) de détection du passage du (des) deuxième(s) repère(s) (3) qui est disposé non-rotatif à peu près sur le rayon R3,
- un module de mesure qui est en communication fonctionnelle avec les capteurs (4, 5) pour la mesure des intervalles de temps séparant les passages des repères (2, 3) se trouvant sur un rayon différent et par
- un module d'analyse (14) pour la détermination de la force longitudinale du pneumatique et/ou de la compression élastique du pneumatique ou de la longueur de l'écrasement ou du rapport charge-pression à l'aide de ces intervalles de temps.

**28.** Dispositif selon la revendication 27, caractérisé en ce que le module d'analyse comprend un circuit qui divise les intervalles de temps mesurés par la durée de la période mesurée à chaque fois et qui détermine ainsi l'angle ou chaque angle local de torsion (Alpha) inscrit entre les deux repères ou les groupes de deux repères (2, 3) à l'emplacement ou aux emplacements déterminé(s) par le lieu des capteurs, le module d'analyse contenant par ailleurs en mémoire la valeur de la force longitudinale du pneumatique et/ou de la compression élastique du pneumatique et/ou de la longueur d'écrasement ou du rapport charge-pression en fonction du ou des angle(s) de torsion et calculant finalement, à l'aide de l'entrée du ou des angle(s) déterminé(s) de torsion, la force longitudinale du pneumatique ou la compression élastique du pneumatique ou la longueur de l'écrasement ou le rapport charge-pression.

**29.** Dispositif selon la revendication 27, caractérisé en ce que l'au moins un premier repère(2) est disposé dans la direction de la circonférence en étant décalé par rapport à l'au moins un deuxième repère (3).

**30.** Dispositif selon la revendication 27, caractérisé en ce que le ou les capteur(s) (4) de détection du ou des premier(s) repère(s) (donc situé(s) radialement à l'extérieur) répond ou répondent à une variation de la densité du flux magnétique.

**31.** Dispositif selon la revendication 30, caractérisé en ce que le pneumatique à contrôler (9) dispose d'au moins une couche de carcasse radiale en cordes d'acier qui comporte une arête de coupe sur le côté (I) du pneumatique qui est tourné axialement vers l'intérieur par rapport au véhicule, au moins une, de préférence une extrémité sur trois des fils d'acier étant conformée en premier repère, de préférence par un prolongement axialement vers l'intérieur.

**32.** Dispositif selon la revendication 27, la paroi latérale du pneumatique portant des repères, caractérisé en ce que le ou les capteur(s) (4) de détection du ou des premier(s) repère(s) répondent à une variation de la réflexion de la lumière et en ce que le pneumatique à contrôler (9) comporte, au moins sur le côté (I) du pneumatique qui est tourné par rapport au véhicule axialement vers l'intérieur, un profilage de la bande de roulement et/ou du côté frontal du pneumatique, de préférence un décor latéral comprenant au moins une rainure qui n'est pas orientée dans la direction de la circonférence, dénommée par la suite rainure transversale, au moins une, de préférence toutes les rainures transversales étant conformée(s) en premier(s) repère(s) de manière qu'elles puissent être détectées par le ou par les capteur(s) préalablement mentionné(s).

**33.** Dispositif selon la revendication 27, de préférence selon la revendication 31 ou la revendication 32, caractérisé en ce qu'il détecte, à un premier état de service, de préférence à une vitesse à peu près constante du véhicule, la position de la phase du ou des premier(s) repère(s) les uns par rapport aux autres et/ou par rapport au(x) repère(s) intérieur(s) et il les mémorise dans le module d'analyse.

**34.** Dispositif selon la revendication 33, le nombre du ou des repère(s) extérieur(s) détectés par le ou les capteur(s) extérieur(s) est différent du nombre du ou des repère(s) intérieur(s) détectés(s) par le ou les capteur(s) intérieur(s), caractérisé en ce que le module d'analyse contient un programme de sélection qui sélectionne le ou les repère(s) qui convient ou qui conviennent le mieux à l'intérieur de chacune des deux pistes de repères pour la formation de groupes de deux repères - de préférence selon la revendication 8 -.

35. Dispositif selon la revendication 27, caractérisé en ce que soit la position de la phase des premiers repères (2) éventuellement sélectionnés est mise en concordance avec la position de la phase des deuxièmes repères (3) ou inversement la position de la phase des deuxièmes repères (3) éventuellement sélectionnés est mise en concordance avec la position de la phase des premiers repères (2) et plus particulièrement de manière que l'angle de la différence (D) (défini dans la revendication 8) soit de même grandeur pour tous les groupes de deux repères (2, 3) de mesure des intervalles de temps.

36. Dispositif selon la revendication 27, de préférence selon la revendication 35, caractérisé en ce que les groupes - éventuellement sélectionnés - de deux repères, dont chacun est formé d'un repère extérieur et d'un repère intérieur, sont répartis irrégulièrement à la circonférence avec un même angle de différence (D) pour tous les groupes de deux repères.

37. Dispositif selon la revendication 27, non selon la revendication 35, caractérisé en ce que la position de la phase des premier et deuxième repères n'est pas en corrélation l'une avec l'autre et le module d'analyse mesure par analyse statistique, de préférence à une première phase de service, les différences entre les différents angles de différence $(D_n)$ de groupes de deux repères $(2_n, 3_n)$ et il les mémorise et les utilise pour la correction de chacune des mesures d'intervalle de temps.

38. Dispositif selon l'une des revendications 27 à 37, caractérisé en ce qu'au moins un groupe non-rotatif de deux capteurs, se composant d'un capteur extérieur (4) et d'un capteur intérieur (5), est disposé à peu près à la position de 0°, une position qui est à la verticale au-dessus de l'axe de rotation étant désignée par 0°.

39. Dispositif selon l'une des revendications 27 à 38, caractérisé en ce que plusieurs groupes de deux capteurs non-rotatifs (4, 5) sont prévus avec une corrélation suffisamment précise sur les rayons (R2 et R3) sur lesquels les repères (2, 3) d'au moins un groupe de deux repères sont disposés sur la roue (1), éventuellement sur le pneumatique (9).

40. Dispositif selon l'une des revendications précédentes 27 à 39, comprenant au moins deux groupes de deux capteurs placés à des positions différentes, les groupes de deux capteurs étant disposés aux positions de 0° et 90° (selon la revendication 24), ou de 0° et 270° (selon la revendication 24), ou de 90° et de 270° (selon les revendications 20 ou 21), ou - en présence de trois groupes de deux capteurs - aux positions de 270° et de 0° et de 90°.

41. Dispositif selon l'une des revendications précédentes 27 à 40, qui détermine le rapport charge-pression, caractérisé en ce que le module d'analyse (14) est en communication fonctionnelle avec un capteur (13) de la pression interne du pneumatique ou avec un capteur (12) de la charge de la roue et en ce qu'il (14) calcule la charge de la roue ou la pression interne du pneumatique.

42. Dispositif selon l'une des revendications précédentes 27 à 40, non 41, qui détermine le rapport charge-pression, caractérisé en ce que le module d'analyse (14) n'est en relation fonctionnelle ni avec un capteur de la pression interne du pneumatique ni avec un capteur de la charge de la roue et en ce qu'il (14) déclenche cependant néanmoins un avertissement et/ou une limitation de la vitesse maximale lorsque le rapport charge-pression dépasse un seuil spécifique au type de véhicule.

43. Dispositif selon l'une des revendications précédentes 27 à 42, une position verticalement au-dessus de l'essieu étant désignée par 0° et les autres positions étant désignées selon leur angle dans le sens de rotation de la roue par rapport à la position de 0°, caractérisé en ce qu'au moins un capteur extérieur (10) de mesure d'une distance est disposé à peu près à la position de 90° - ou à celle de 270° -, de préférence encore un capteur (10) de mesure de distance étant aussi disposé à la position de 0°, un capteur de mesure de distance (10) et un capteur extérieur (4) de mesure d'intervalle de temps étant de préférence réunis en un composant, la force transversale du pneumatique étant déterminée dans un module d'analyse (14) à l'aide de la distance axiale ou des distances axiales mesurée(s) par le ou les, ou sur le ou les capteur(s) (10 et éventuellement 4).

44. Pneumatique de véhicule qui comporte plusieurs repères (2), par exemple sur la paroi latérale (1),

caractérisé en ce qu'il comporte au moins dans sa zone radialement extérieure, de préférence dans la paroi latérale (1) ou dans la zone de l'épaulement une piste circulaire de repères (2) dont le passage devant des capteurs est détecté par voie magnétique ou par induction de manière qu'il convienne à un dispositif selon l'une des revendications 27 à 43 et/ou pour la mise en oeuvre d'un procédé selon l'une des revendications 1 à 26.

45. Pneumatique de véhicule selon la revendication 44, caractérisé en ce qu'au moins un autre repère (3) situé radialement plus à l'intérieur que le repère ou les repères (2) est disposé dans la paroi latérale (1), de préférence dans la région du talon.

46. Pneumatique de véhicule selon la revendication 44 ou 45, caractérisé en ce que plusieurs autres repères (3) situés radialement plus à l'intérieur que le repère ou les repères (2) est disposé sur un cercle dans la paroi latérale (1), de préférence dans la région du talon.

47. Pneumatique de véhicule selon l'une des revendications 44 à 46, caractérisé en ce que les repères extérieurs et intérieurs sont disposés par groupes de deux de manière que l'angle de différence (D) (défini dans la revendication 8) soit de même grandeur, de préférence différent de zéro, pour tous les groupes de deux repères mesurant des intervalles de temps.

48. Pneumatique de véhicule selon au moins l'une des revendications 44 à 47, caractérisé en ce que les repères (2, 3) sont en métal.

49. Pneumatique de véhicule selon au moins l'une des revendications 44 à 48, caractérisé en ce qu'au moins certains des repères (2, 3) sont magnétiques.

50. Pneumatique de véhicule selon au moins l'une des revendications 44 à 49, caractérisé en ce que les repères (2, 3) débordent de la paroi latérale (1).

# FIG. 1

FIG. 2

FIG. 3a

FIG. 3b

FIG. 3c

FIG. 3d

$$\alpha = 2\pi n \cdot \triangle t_{2,3}$$

FIG. 4

FIG. 5

FIG. 6

FIG. 7

FIG. 8

# FIG. 8a

oben

FIG. 9

9

R2

FIG. 10